(19) **Europäisches Patentamt / European Patent Office / Office européen des brevets**

(11) **EP 4 456 639 A1**

(12) **EUROPEAN PATENT APPLICATION**
published in accordance with Art. 153(4) EPC

(43) Date of publication:
**30.10.2024 Bulletin 2024/44**

(21) Application number: **23762867.2**

(22) Date of filing: **28.02.2023**

(51) International Patent Classification (IPC):
**H04W 72/04** (2023.01)

(52) Cooperative Patent Classification (CPC):
**H04W 72/04; H04W 72/0446; H04W 72/0453; H04W 72/20; H04W 72/53; H04W 72/566**

(86) International application number:
**PCT/CN2023/078714**

(87) International publication number:
**WO 2023/165468 (07.09.2023 Gazette 2023/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.03.2022 CN 202210194595**

(71) Applicant: **Huawei Technologies Co., Ltd.**
**Shenzhen, Guangdong 518129 (CN)**

(72) Inventors:
- **SU, Hongjia**
  **Shenzhen, Guangdong 518129 (CN)**
- **ZHANG, Yi**
  **Shenzhen, Guangdong 518129 (CN)**
- **XIANG, Zhengzheng**
  **Shenzhen, Guangdong 518129 (CN)**
- **LU, Lei**
  **Shenzhen, Guangdong 518129 (CN)**

(74) Representative: **Thun, Clemens**
**Mitscherlich PartmbB**
**Patent- und Rechtsanwälte**
**Karlstraße 7**
**80333 München (DE)**

(54) **RESOURCE DETERMINATION METHOD AND DEVICE**

(57)     This application provides a resource determining method and apparatus, and is applicable to the field of sidelink communication such as V2X, intelligent driving, and intelligent connected vehicles. The method includes: A first terminal apparatus determines an available time-frequency resource set in a resource selection window based on resource reservation information of a second terminal apparatus and a first channel occupancy time, where the first channel occupancy time is a channel occupancy time shared by the first terminal apparatus and the second terminal apparatus. In this application, when excluding a time-frequency resource occupied by another terminal apparatus during resource selection, the first terminal apparatus does not need to exclude a time-frequency resource unit reserved by another terminal apparatus except for the second terminal apparatus, to prevent excessive time-frequency resource units from being excluded. This can improve resource utilization and reduce a sidelink communication delay while improving communication reliability.

301: A first terminal apparatus determines an available time-frequency resource set in a resource selection window based on resource reservation information of a second terminal apparatus and a first channel occupancy time

302: The first terminal apparatus sends first data on at least one first time-frequency resource unit in the available time-frequency resource set

FIG. 8

**Description**

**CROSS-REFERENCE TO RELATED APPLICATIONS**

This application claims priority to Chinese Patent Application No. 202210194595.3, filed with the China National Intellectual Property Administration on March 1, 2022 and entitled "RESOURCE DETERMINING METHOD AND APPARATUS", which is incorporated herein by reference in its entirety.

**TECHNICAL FIELD**

This application relates to the field of mobile communication technologies, and in particular, to a resource determining method and apparatus.

**BACKGROUND**

In current new radio (new radio, NR) sidelink (sidelink, SL) communication, a terminal apparatus as a transmit end (referred to as a transmit end terminal apparatus below) may send sidelink control information (sidelink control information, SCI) and sidelink data to a terminal apparatus as a receive end (referred to as a receive end terminal apparatus below) on a sidelink. The receive end terminal apparatus receives the SCI to receive and decode the sidelink data. The transmit end terminal apparatus may perform resource selection through sensing (sensing) to send the sidelink control information and the sidelink data. Specifically, the transmit end terminal apparatus senses sidelink control information sent by another transmit end terminal apparatus, and selects a resource based on resource reservation information carried in the sidelink control information, to avoid a collision between the selected resource and a resource reserved by the another transmit end terminal apparatus.

When SL communication occurs on an unlicensed spectrum, according to legal and regulatory requirements of the country/region, before performing sending, the transmit end terminal apparatus needs to access an unlicensed frequency band based on a contention mechanism (for example, a listen before talk (listen before talk, LBT) mechanism). After accessing the unlicensed frequency band, the transmit end terminal apparatus still needs to determine, based on reservation information that is sent by all terminal apparatuses on a channel and that is used to reserve resources, a time-frequency resource that the transmit end terminal apparatus is allowed to use, to implement resource selection.

However, based on the contention mechanism, not all the terminal apparatuses that send the reservation information can perform sending on a channel accessed by the transmit end terminal apparatus. Because the channel has been occupied by the transmit end terminal apparatus, a terminal apparatus that does not access the channel cannot perform sending actually even if the terminal apparatus reserves a resource based on the reservation information, and therefore the reserved resource does not interfere with sending of the transmit end terminal apparatus. As a result, during resource selection, the transmit end terminal apparatus additionally excludes an available resource that does not collide, reducing resource utilization, increasing a communication delay, and reducing sidelink communication performance.

**SUMMARY**

This application provides a resource determining method and apparatus, to improve sidelink communication reliability and reduce a communication delay.

According to a first aspect, this application provides a resource determining method. The method may be applied to the field of sidelink communication such as vehicle-to-everything (vehicle to everything, V2X), intelligent driving, or intelligent connected vehicles. The method may be performed by a first communication apparatus. The first communication apparatus may be a communication device, or may be a communication apparatus that can support the communication device in implementing a function required in the method, for example, a chip. For example, the first communication apparatus is a first terminal apparatus. For example, the first terminal apparatus may be a terminal device, may be a chip that is disposed in the terminal device and that is configured to implement a function of the terminal device, or may be another part configured to implement a function of the terminal device. In the following description process, an example in which the first communication apparatus is the first terminal apparatus is used. The method includes the following steps: The first terminal apparatus determines an available time-frequency resource set in a resource selection window based on resource reservation information of a second terminal apparatus and a first channel occupancy time, where the first channel occupancy time is a channel occupancy time shared by the first terminal apparatus and the second terminal apparatus, the first channel occupancy time is in the resource selection window determined by the first terminal apparatus, the resource reservation information indicates a first time-frequency resource set used by the second terminal apparatus to send data, a first part of time-frequency resource units in the first time-frequency resource set are in the first channel occupancy time, and the available time-frequency resource set does not include at least one time-frequency resource unit in the first part of time-frequency resource units. The first terminal apparatus sends first data on at least one first time-frequency resource unit in the available time-frequency resource set.

In this embodiment of this application, the first terminal apparatus may determine an available time-frequency resource unit based on the first channel occupancy time and a time-frequency resource reserved by the second terminal apparatus that shares the first channel occupancy time with the first terminal apparatus. When excluding a time-frequency resource occupied by another terminal apparatus, the first terminal apparatus does not need to exclude a time-frequency resource unit reserved by another terminal apparatus except for the second terminal apparatus, to prevent excessive time-frequency resource units from being excluded. This can improve resource utilization and reduce a sidelink communication delay while improving communication reliability.

In a possible implementation, the first terminal apparatus may further send first information to the second terminal apparatus, where the first information includes second information and an identifier of the second terminal apparatus, and the second information indicates the at least one time-frequency resource unit in the first part of time-frequency resource units.

In this embodiment of this application, the first terminal apparatus may further send sharing indication information, namely, the first information, to the second terminal apparatus, to indicate, to the second terminal apparatus, the first terminal apparatus to share the first channel occupancy time with the second terminal apparatus, so that the second terminal apparatus can perform corresponding processing. The first information may further indicate the at least one time-frequency resource unit in the first part of time-frequency resource units, and the time-frequency resource unit is not included in the available time-frequency resource set of the first terminal apparatus. Therefore, the second terminal apparatus may send data on the at least one time-frequency resource unit, indicated by the first information, in time-frequency resource units. This can reduce interference of sidelink communication between the first terminal apparatus and the second terminal apparatus, and improve resource determining rationality.

In a possible implementation, if there are a plurality of terminal apparatuses that share the first channel occupancy time with the first terminal apparatus, and/or there are a plurality of pieces of resource reservation information received by the first terminal apparatus (or a plurality of terminal apparatuses to which the resource reservation information belongs), the first terminal apparatus may determine at least one second terminal apparatus based on service priorities of these terminal apparatuses, to further increase a quantity of optional resource units of the first terminal apparatus, so as to further improve resource selection efficiency. For example, the service priority may be determined based on a priority indicated in the resource reservation information.

In a possible implementation, the first information further includes a duration of the first channel occupancy time. For example, the duration of the first channel occupancy time is included in an information element of the first information. Alternatively, the duration of the first channel occupancy time may be separately sent independently of the first information.

In a possible implementation, the first time-frequency resource unit and the at least one time-frequency resource unit in the first part of time-frequency resource units occupy consecutive slots in time domain.

In this embodiment of this application, the first time-frequency resource unit used by the first terminal apparatus to send the first data and the at least one time-frequency resource unit in the first part of time-frequency resource units are consecutive in time domain, to avoid a case that because an excessively long time-domain resource is not used by the first terminal apparatus and the second terminal apparatus to send data, a channel occupied by the first terminal apparatus is preempted by another terminal apparatus based on a contention mechanism, and once the channel is preempted by the another terminal apparatus, channel access needs to be performed again for subsequent sending of the first terminal apparatus, resulting in an increase in a transmission delay. Therefore, this implementation can reduce a communication delay of the first terminal apparatus.

In a possible implementation, a gap whose length does not exceed a first duration and/or is greater than or equal to a second duration exists at the end of a first slot, and a length of the gap is marked as $t_{gap}$, in this case, second duration $\leq t_{gap} \leq$ first duration , $t_{gap} \geq$ second duration, or $t_{gap} \leq$ first duration, the first slot is a slot of a third time-frequency resource unit, the third time-frequency resource unit is included in the first time-frequency resource unit, and the third time-frequency resource unit is before the at least one time-frequency resource unit, adjacent to the third time-frequency resource unit, in the first part of time-frequency resource units; and/or a gap whose length does not exceed the first duration and/or is greater than or equal to the second duration exists at the end of a first slot, a length of the gap is marked as $t_{gap}$, in this case, second duration $\leq t_{gap} \leq$ first duration, $t_{gap} \geq$ second duration, or $t_{gap} \leq$ first duration, the third slot is a time-domain resource unit of a fourth time-frequency resource unit, the fourth time-domain resource unit is included in the at least one time-frequency resource unit in the first part of time-frequency resource units, and the fourth time-domain resource unit is before a first time-frequency resource unit adjacent to the fourth time-domain resource unit.

In this embodiment of this application, in an example, when a time domain gap (namely, a minimum time domain gap) between a time domain location, occupied by data of the first terminal apparatus, in the first channel occupancy time (for example, a time domain location, occupied by the first data, in the first time-frequency resource unit) and a next slot occupied by the second terminal apparatus does not exceed the first duration, it may be considered that the first time-frequency resource unit and the at least one time-frequency resource unit in the first part of time-frequency resource units occupy consecutive slots in time domain. In addition, optionally, the time domain gap may be greater than a second duration, and the second duration is a duration in which the second terminal apparatus performs LBT before accessing the channel, so that the second terminal apparatus can perform sending on a first channel from a next slot.

In a possible implementation, the first duration may be less than or equal to a duration of one slot and/or the second duration may be less than or equal to the duration of the slot. For example, the first duration is 584 microseconds, 16 microseconds, or 25 microseconds, and the second duration may be 584 microseconds, 16 microseconds, or 25 microseconds.

In this embodiment of this application, the first duration is less than a duration of one slot and/or the second duration is less than the duration of the slot. Therefore, a risk that a channel is preempted by another terminal apparatus can be further avoided.

In a possible implementation, the first terminal apparatus may access a first channel at a first moment, where the first moment is a start moment of the first channel occupancy time, the first moment is in the first slot, and the first slot is in the resource selection window; the first terminal apparatus may further trigger resource selection in a second slot; and the first terminal apparatus may further determine a sensing window and the resource selection window based on the second slot, where the resource reservation information is received in the sensing window, the sensing window is before the second slot, and the resource selection window is after the second slot.

In this embodiment of this application, the sensing window of the first terminal apparatus is before the second slot, and the resource selection window is after the second slot. The second slot is a slot in which resource selection is triggered. This implements resource selection more efficiently and properly.

In a possible implementation, the first terminal apparatus may access a first channel at a first moment, where the first moment is a start moment of the first channel occupancy time, and the first moment is in the first slot; and the first terminal apparatus determines the resource selection window based on the first slot, where a start slot of the resource selection window is the first slot.

In this embodiment of this application, a start moment of the resource selection window of the first terminal apparatus may be the first moment, namely, a moment at which the first terminal apparatus completes channel access of the first channel. Therefore, a time-frequency resource unit before the first moment does not need to be considered as a time-frequency resource unit in the available time-frequency resource set. This implements resource selection more efficiently and properly.

In a possible implementation, the first terminal apparatus may determine a sensing window based on the first slot, where a gap between an end slot of the sensing window and the first slot in time domain is N slots, and N is an integer greater than or equal to 0.

In this embodiment of this application, a time domain gap between the sensing window of the first terminal apparatus and the first slot may be N slots, and N is a positive integer, so that the first terminal apparatus can determine the sensing window based on the first slot, thereby implementing resource selection more properly.

In a possible implementation, the resource selection window of the first terminal apparatus may be set in the following manner, to implement resource selection more efficiently and properly: A time domain location of the resource selection window is $[n_1, n_1 + T_4]$, $n_1$ indicates the first slot, $T_4$ is a positive integer, $T_4$ satisfies: $n_1 < n_1 + T_4 \leq PDB$ and $0 < (T_4 + 1) \cdot 2^\mu \leq T_{m\,cot,p}$, $T_{m\,cot,p}$ indicates a maximum time domain length of the first channel occupancy time, $PDB$ indicates a packet delay budget, and a value of $\mu$ is related to a subcarrier spacing corresponding to the first terminal apparatus.

In a possible implementation, the sensing window of the first terminal apparatus may be set in the following manner, to implement resource selection more efficiently and properly: A time domain location of the sensing window is $[n_1 - T_{proc,0}^{SL} - T_{proc,1}^{SL} - T_0, \ n_1 - T_{proc,0}^{SL} - T_{proc,1}^{SL}]$, $n_1$ indicates the first slot, values of $T_0$, $T_{proc,0}^{SL}$, and $T_{proc,1}$ are related to a subcarrier spacing corresponding to the first terminal apparatus, and $T_0$ is a positive integer.

According to a second aspect, this application provides another resource determining method. The method may be performed by a second communication apparatus. The second communication apparatus may be a communication device, or may be a communication apparatus that can support the communication device in implementing a function required in the method, for example, a chip. For example, the second communication apparatus is a second terminal apparatus. For example, the second terminal apparatus may be a terminal device, may be a chip that is disposed in the terminal device and that is configured to implement a function of the terminal device, or may be another part configured to implement a function of the terminal device. In the following description process, an example in which the second communication apparatus is the second terminal apparatus is used. The method includes the following steps: The second terminal apparatus determines resource reservation information, where the resource reservation information indicates a first time-frequency resource set used by the second terminal apparatus to send second data, a first part of time-frequency resource units in the first time-frequency resource set are in a first channel occupancy time, and the first channel occupancy time is a channel occupancy time shared by a first terminal apparatus and the second terminal apparatus; and the second terminal apparatus sends the resource reservation information.

In a possible implementation, the second terminal apparatus may further receive first information from the first terminal apparatus, where the first information includes second information and an identifier of the second terminal apparatus, and the second information indicates at least one time-frequency resource unit in the first part of time-frequency resource units.

In a possible implementation, the first information may further include a duration of the first channel occupancy time.

In a possible implementation, the second terminal apparatus may further access a channel based on the first information, and send third data on the at least one time-frequency resource unit in the first part of time-frequency resource units, where the third data belongs to the second data.

According to a third aspect, a communication apparatus is provided. For example, the communication apparatus is the first communication apparatus described above. The first communication apparatus is configured to perform the method according to any one of the first aspect or the possible implementations. Specifically, the first communication apparatus may include a module configured to perform the method according to any one of the first aspect or the possible implementations, for example, include a processing module and a communication module. For example, the communication module may include a sending module and a receiving module. The sending module and the receiving module may be different functional modules, or may be a same functional module, but can implement different functions. For example, the first communication apparatus is a first terminal apparatus. For example, the first terminal apparatus is a communication device, or is a chip or another part disposed in the communication device. For example, the communication device is a terminal device. The following uses an example in which the first communication apparatus is the first terminal apparatus. For example, the communication module may alternatively be implemented by using a transceiver, and the processing module may alternatively be implemented by using a processor. Alternatively, the sending module may be implemented by using a transmitter, and the receiving module may be implemented by using a receiver. The transmitter and the receiver may be different functional modules, or may be a same functional module, but can implement different functions. Optionally, the first communication apparatus may further include a storage module. For example, the storage module may be implemented by using a memory. The memory may be configured to store computer instructions. The processor may invoke and execute the computer instructions, to implement the method according to any one of the first aspect or the possible implementations. The memory may be a composition part of the first communication apparatus. Alternatively, the first communication apparatus may not include a memory, the memory is located outside the first communication apparatus, and the processor may invoke computer instructions stored in the external memory. If the first communication apparatus is the communication device, the transceiver is implemented, for example, via an antenna, a feeder, and a codec in the communication device. Alternatively, if the first communication apparatus is the chip disposed in the communication device, the transceiver (or the transmitter and the receiver) is, for example, a communication interface of the chip, and the communication interface is connected to a radio frequency transceiver component in the communication device, to implement information receiving and sending via the radio frequency transceiver component. In a description process of the third aspect, an example in which the first communication apparatus is the first terminal apparatus, and the processing module and the communication module are still used for description.

The communication module may be configured to determine an available time-frequency resource set in a resource selection window based on resource reservation information of a second terminal apparatus and a first channel occupancy time, where the first channel occupancy time is a channel occupancy time shared by the apparatus and the second terminal apparatus, the first channel occupancy time is in the resource selection window determined by the apparatus, the resource reservation information indicates a first time-frequency resource set used by the second terminal apparatus to send data, a first part of time-frequency resource units in the first time-frequency resource set are in the first channel occupancy time, and the available time-frequency resource set does not include at least one time-frequency resource unit in the first part of time-frequency resource units.

The processing module may be configured to determine first data.

The communication module may be further configured to send the first data on at least one first time-frequency resource unit in the available time-frequency resource set.

In a possible implementation, the communication module may be further configured to send first information to the second terminal apparatus, where the first information includes second information and an identifier of the second terminal apparatus, and the second information indicates the at least one time-frequency resource unit in the first part of time-frequency resource units.

In a possible implementation, the first information further includes a duration of the first channel occupancy time.

In a possible implementation, the first time-frequency resource unit and the at least one time-frequency resource unit in the first part of time-frequency resource units occupy consecutive slots in time domain.

In a possible implementation, a gap whose length does not exceed a first duration and/or is greater than or equal to a second duration exists at the end of a first slot, the first slot is a slot of a third time-frequency resource unit, the third time-frequency resource unit is included in the first time-frequency resource unit, and the third time-frequency resource unit is before the at least one time-frequency resource unit, adjacent to the third time-frequency resource unit, in the first part of time-frequency resource units; and/or a gap whose length does not exceed the first duration and/or is greater than or equal to the second duration exists at the end of a third slot, the third slot is a time-domain resource unit of a fourth time-frequency resource unit, the fourth time-domain resource unit is included in the at least one time-frequency resource unit in the first part of time-frequency resource units, and the fourth time-domain resource unit is before a first time-frequency resource unit adjacent to the fourth time-domain resource unit.

In a possible implementation, the first duration is less than a duration of one slot and/or the second duration is less than the duration of the slot.

In a possible implementation, the processing module may be further configured to access a first channel at a first moment, where the first moment is a start moment of the first channel occupancy time, the first moment is in the first slot, and the first slot is in the resource selection window; and may be further configured to trigger resource selection in a second slot, and determine a sensing window and the resource selection window based on the second slot, where the resource reservation information is received in the sensing window, the sensing window is before the second slot, and the resource selection window is after the second slot.

In a possible implementation, the processing module may be further configured to access a first channel at a first moment, where the first moment is a start moment of the first channel occupancy time, and the first moment is in the first slot; and may be further configured to determine the resource selection window based on the first slot, where a start slot of the resource selection window is the first slot.

In a possible implementation, the processing module may be further configured to determine a sensing window based on the first slot, where a gap between an end slot of the sensing window and the first slot in time domain is N slots, and N is an integer greater than or equal to 0.

In a possible implementation, a time domain location of the resource selection window is $[n_1, n_1 + T_4]$, $n_1$ indicates the first slot, $T_4$ is a positive integer, $T_4$ satisfies: $n_1 < n_1 + T_4 \leq PDB$ and $0 < (T_4 + 1) \cdot 2^\mu \leq T_{m\,cot,p}$, $T_{m\,cot,p}$ indicates a maximum time domain length of the first channel occupancy time, $PDB$ indicates a packet delay budget, and a value of $\mu$ is related to a subcarrier spacing corresponding to the first terminal apparatus.

In a possible implementation, a time domain location of the sensing window is $[n_1 - T_{proc,0}^{SL} - T_{proc,1}^{SL} - T_0,\ n_1 - T_{proc,0}^{SL} - T_{proc,1}^{SL}]$, $n_1$ indicates the first slot, values of $T_0$, $T_{proc,0}^{SL}$, and $T_{proc,1}$ are related to a subcarrier spacing corresponding to the first terminal apparatus, and $T_0$ is a positive integer.

According to a fourth aspect, a communication apparatus is provided. For example, the communication apparatus is the second communication apparatus described above. The second communication apparatus is configured to perform the method according to any one of the second aspect or the possible implementations. Specifically, the second communication apparatus may include a module configured to perform the method according to any one of the second aspect or the possible implementations, for example, include a processing module and a communication module. For example, the communication module may include a sending module and a receiving module. The sending module and the receiving module may be different functional modules, or may be a same functional module, but can implement different functions. For example, the second communication apparatus is a first terminal apparatus. For example, the first terminal apparatus is a communication device, or is a chip or another part disposed in the communication device. For example, the communication device is a terminal device. The following uses an example in which the second communication apparatus is the first terminal apparatus. For example, the communication module may alternatively be implemented by using a transceiver, and the processing module may alternatively be implemented by using a processor. Alternatively, the sending module may be implemented by using a transmitter, and the receiving module may be implemented by using a receiver. The transmitter and the receiver may be different functional modules, or may be a same functional module, but can implement different functions. Optionally, the second communication apparatus may further include a storage module. For example, the storage module may be implemented by using a memory. The memory may be configured to store computer instructions. The processor may invoke and execute the computer instructions, to implement the method according to any one of the second aspect or the possible implementations. The memory may be a composition part of the second communication apparatus. Alternatively, the second communication apparatus may not include a memory, the memory is located outside the second communication apparatus, and the processor may invoke computer instructions stored in the external memory. If the second communication apparatus is the communication device, the transceiver is implemented, for example, via an antenna, a feeder, and a codec in the communication device. Alternatively, if the second communication apparatus is the chip disposed in the communication device, the transceiver (or the transmitter and the receiver) is, for example, a communication interface of the chip, and the communication interface is connected to a radio frequency transceiver component in the communication device, to implement information receiving and sending via the radio frequency transceiver component. In a description process of the fourth aspect, an example in which the second communication apparatus is the first terminal apparatus, and the processing module and the communication module are still used for description.

The processing module may be configured to determine resource reservation information, where the resource reservation information indicates a first time-frequency resource set used by a second terminal apparatus to send second data, a first part of time-frequency resource units in the first time-frequency resource set are in a first channel occupancy time, and the first channel occupancy time is a channel occupancy time shared by the first terminal apparatus and the second terminal apparatus.

The communication module may be configured to send the resource reservation information.

In a possible implementation, the communication module may be further configured to receive first information from the first terminal apparatus, where the first information includes second information and an identifier of the apparatus, and the second information indicates at least one time-frequency resource unit in the first part of time-frequency resource units.

In a possible implementation, the first information may further include a duration of the first channel occupancy time.

In a possible implementation, the processing module may be further configured to access a channel based on the first information; and the communication module may be further configured to send third data on the at least one time-frequency resource unit in the first part of time-frequency resource units, where the third data belongs to the second data.

According to a fifth aspect, a communication apparatus is provided. For example, the communication apparatus is the first communication apparatus described above. The communication apparatus includes one or more processors. Optionally, the communication apparatus may further include a memory, configured to store computer instructions. The one or more processors are coupled to the memory, to implement the method according to any one of the first aspect or the possible implementations. Alternatively, the first communication apparatus may not include a memory, and the memory may be located outside the first communication apparatus. Optionally, the first communication apparatus may further include a communication interface, configured to communicate with another apparatus or device. The processor, the memory, and the communication interface are coupled to each other, to implement the method according to any one of the first aspect or the possible implementations. For example, when the processor executes the computer instructions stored in the memory, the first communication apparatus is enabled to perform the method according to any one of the first aspect or the possible implementations. For example, the first communication apparatus is a first terminal apparatus. For example, the first terminal apparatus is a communication device, or is a chip or another part disposed in the communication device. For example, the communication device is a terminal device.

If the first communication apparatus is the communication device, the communication interface is implemented, for example, by using a transceiver (or a transmitter and a receiver) in the communication device, and the transceiver is implemented, for example, via an antenna, a feeder, and a codec in the communication device. Alternatively, if the first communication apparatus is the chip disposed in the communication device, the communication interface is, for example, an input/output interface such as an input/output pin of the chip, and the communication interface is connected to a radio frequency transceiver component in the communication device, to implement information receiving and sending via the radio frequency transceiver component.

According to a sixth aspect, a communication apparatus is provided. For example, the communication apparatus is the second communication apparatus described above. The communication apparatus includes one or more processors. Optionally, the communication apparatus may further include a memory, configured to store computer instructions. The one or more processors are coupled to the memory, to implement the method according to any one of the second aspect or the possible implementations. Alternatively, the second communication apparatus may not include a memory, and the memory may be located outside the second communication apparatus. Optionally, the second communication apparatus may further include a communication interface, configured to communicate with another apparatus or device. The processor, the memory, and the communication interface are coupled to each other, to implement the method according to any one of the second aspect or the possible implementations. For example, when the processor executes the computer instructions stored in the memory, the second communication apparatus is enabled to perform the method according to any one of the second aspect or the possible implementations. For example, the second communication apparatus is a first terminal apparatus. For example, the first terminal apparatus is a communication device, or is a chip or another part disposed in the communication device. For example, the communication device is a terminal device.

If the second communication apparatus is the communication device, the communication interface is implemented, for example, by using a transceiver (or a transmitter and a receiver) in the communication device, and the transceiver is implemented, for example, via an antenna, a feeder, and a codec in the communication device. Alternatively, if the second communication apparatus is the chip disposed in the communication device, the communication interface is, for example, an input/output interface such as an input/output pin of the chip, and the communication interface is connected to a radio frequency transceiver component in the communication device, to implement information receiving and sending via the radio frequency transceiver component.

According to a seventh aspect, a communication system is provided. The communication system includes the communication apparatus according to the third aspect or the communication apparatus according to the fifth aspect.

According to an eighth aspect, a communication system is provided. The communication system includes the communication apparatus according to the fourth aspect or the communication apparatus according to the sixth aspect.

According to a ninth aspect, a computer-readable storage medium or a nonvolatile storage medium is provided. The computer-readable storage medium or the nonvolatile storage medium is configured to store computer instructions or a program. When the computer instructions or the program is run on a computer, the computer is enabled to perform the method according to any one of the first aspect or the possible implementations.

According to a tenth aspect, a computer-readable storage medium or a nonvolatile storage medium is provided. The computer-readable storage medium or the nonvolatile storage medium is configured to store computer instructions or a program. When the computer instructions or the program is run on a computer, the computer is enabled to perform the method according to any one of the second aspect or the possible implementations.

According to an eleventh aspect, a computer program product including instructions is provided. The computer program product is configured to store computer instructions. When the computer instructions are run on a computer, the computer is enabled to perform the method according to any one of the first aspect or the possible implementations.

According to a twelfth aspect, a computer program product including instructions is provided. The computer program product is configured to store computer instructions. When the computer instructions are run on a computer, the computer is enabled to perform the method according to any one of the second aspect or the possible implementations.

For technical effect of the third aspect to the twelfth aspect or the implementations, refer to the descriptions of technical effect of the first aspect or the corresponding implementations.

In embodiments of this application, when excluding a resource based on reservation information of another terminal apparatus, the first terminal apparatus considers only reservation information of the second terminal apparatus that shares the first channel occupancy time with the first terminal apparatus, and does not need to exclude a resource reserved by another terminal apparatus, thereby increasing a quantity of optional resource units of the first terminal apparatus. This can improve resource selection efficiency.

For technical effect brought by the second aspect to the seventh aspect, refer to the description of the first aspect. Details are not described herein again.

**BRIEF DESCRIPTION OF DRAWINGS**

FIG. 1 is a diagram of an architecture of a wireless communication system according to this application;
FIG. 2 is a diagram of an architecture of another wireless communication system according to this application;
FIG. 3A is a diagram of a slot according to this application;
FIG. 3B is a diagram of interlaces according to an embodiment of this application;
FIG. 4A is a diagram of a resource pool according to an embodiment of this application;
FIG. 4B is a diagram of another resource pool according to an embodiment of this application;
FIG. 5 is a diagram of another resource pool according to an embodiment of this application;
FIG. 6 is a diagram of a structure of a communication apparatus according to an embodiment of this application;
FIG. 7 is a diagram of a structure of another communication apparatus according to an embodiment of this application;
FIG. 8 is a schematic flowchart of a resource determining method according to an embodiment of this application;
FIG. 9A is a diagram of a resource determining manner according to an embodiment of this application;
FIG. 9B is a diagram of another resource determining manner according to an embodiment of this application;
FIG. 9C is a diagram of another resource determining manner according to an embodiment of this application;
FIG. 10 is a diagram of a sensing window and a resource selection window according to this application;
FIG. 11 is a diagram of a time domain gap according to this application;
FIG. 12 is a diagram of another resource determining manner according to an embodiment of this application;
FIG. 13 is a diagram of another resource determining manner according to an embodiment of this application; and
FIG. 14 is a diagram of another resource determining manner according to an embodiment of this application.

**DESCRIPTION OF EMBODIMENTS**

The following describes some terms in embodiments of this application, to facilitate understanding of persons skilled in the art.

(1) A terminal apparatus is, for example, a terminal device or a module, for example, a chip system, configured to implement a function of the terminal device, where the chip system may be disposed in the terminal device. The terminal device includes a device that provides data connectivity for a user. Specifically, the terminal device includes the device that provides data connectivity for the user, or includes the device that provides data connectivity for the user. For example, a hand-held device with a wireless connection function or a processing device connected to a wireless modem may be included. The terminal device may communicate with a core network through a radio access network (radio access network, RAN), and exchange data with the RAN or exchange voice and data with the core network. The terminal device may include user equipment (user equipment, UE), a wireless terminal device, a mobile terminal device, a device-to-device (device-to-device, D2D) communication terminal device, a vehicle-to-everything (vehicle to everything, V2X) communication terminal device, an intelligent vehicle, an in-car infotainment system (or referred to as an internet of vehicles system) (telematics box, TBOX), a machine-to-machine/machine-type communication (machine-to-machine/machine-type communication, M2M/MTC) terminal device, and an internet of things (internet of things, IoT) terminal device. Most typically, the terminal apparatus may be a carrier such as a vehicle, a ship, or an aircraft, a terminal-type road side unit, or a communication module or chip built in the vehicle or road side unit. A network device in a V2X technology is a road side unit (road side unit, RSU). The RSU may be a fixed infrastructure entity supporting a V2X application, and may exchange, through a PC5 air interface, a message with another entity supporting the V2X application. In addition, the terminal apparatus may further include a communication apparatus in a future communication system such as a metaverse.

In embodiments of this application, communication between terminal apparatuses through a PC5 interface is supported, in other words, transmission on a sidelink is supported. A transmission link in the PC5 interface is defined as a sidelink. Enabling SL communication on an unlicensed frequency band in local space is an important evolution direction, and corresponding protocol technologies may be collectively referred to as a sidelink-unlicensed (sidelink-unlicensed, SL-U) technology.

By way of example and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on a body or integrated into clothes or an accessory of a user. The wearable device not only is a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands, smart helmets, or smart jewelry for monitoring physical signs.

However, if the various terminal devices described above are located in a vehicle, for example, placed in the vehicle or mounted in the vehicle, the terminal devices may be all considered as vehicle-mounted terminal devices. For example, the vehicle-mounted terminal device is also referred to as an on board unit (on board unit, OBU).

In embodiments of this application, the terminal device may further include a relay (relay). Alternatively, it is understood that any device that can perform data communication with a base station may be considered as the terminal device.

Optionally, a road side unit (road side unit, RSU) may be further considered as the terminal apparatus.

The following describes a communication method provided in embodiments of this application by using the terminal apparatus as an example. For example, in sidelink communication, a party that sends sidelink data (for example, a transmit node) may be referred to as a transmit end terminal apparatus, and a party that receives the sidelink data (for example, a receive node) may be referred to as a receive end terminal apparatus. For ease of description in this application, subsequently, a terminal apparatus that receives sidelink information (that is, a node for receiving the sidelink information) is referred to as a first communication apparatus, and a terminal apparatus that sends the sidelink information (that is, a node for transmitting the sidelink information) is referred to as a second terminal apparatus. In other words, the first communication apparatus is a node for transmitting sidelink feedback information, and the second communication apparatus is a node for receiving the sidelink feedback information. The sidelink feedback information may indicate a status of receiving the sidelink information by the first terminal apparatus (including correct receiving or incorrect receiving). The sidelink feedback information may be used for data information (including acknowledgment feedback information of a hybrid automatic repeat request (hybrid automatic repeat request, HARQ), for example, an acknowledgment (acknowledge, ACK) or a negative acknowledgment (negative acknowledge, NACK), may further include channel state information (channel state information, CSI) feedback information, and may be further indicate at least one of the following information, for example, energy saving information and resource assistance information (including a resource recommended for use, a resource not recommended for use, a resource collision, a resource reservation conflict, a half-duplex collision that has occurred in the past or is about to occur in the future, and the like)).

In this application, the sidelink information (SL information) may include at least one of the information: sidelink discovery information (the sidelink discovery information may be carried on a sidelink discovery channel (physical sidelink discovery channel, PSDCH) and/or a physical sidelink shared channel (physical sidelink shared channel, PSSCH)), sidelink control information (sidelink control information, SCI) (the SCI is carried on a sidelink control channel (physical sidelink control channel, PSCCH) and/or the PSSCH), sidelink data information (or referred to as data, sidelink data, or the like) (the sidelink data information is carried on the PSSCH), the sidelink feedback information (carried on a physical sidelink feedback channel (physical sidelink feedback channel, PSFCH)), sidelink synchronization information (carried in a sidelink synchronization block (sidelink-synchronization signal block, S-SSB)), or sidelink pilot information (reference signaling) (including a demodulation reference signal (demodulation reference signal, DMRS), a channel state information reference signal (channel state information reference signal, CSI-RS), a phase-tracking reference signal (phase-tracking reference signal, PTRS), a positioning reference signal (positioning reference signal, PRS), a discovery reference signal (discovery reference signal, DRS), or the like).

(2) A network device is an access device through which a terminal device accesses a mobile communication system in a wireless manner, and includes a radio access network (radio access network, RAN) device, for example, a base station. The network device may alternatively be a device that communicates with the terminal device through an air interface. The network device may include an evolved NodeB (evolved NodeB), which may be briefly referred to as an eNB or an e-NodeB, in an LTE system or a long term evolution-advanced (long term evolution-advanced, LTE-A) system. The eNB is an apparatus that is deployed in a radio access network, that meets a fourth generation (the fourth generation, 4G) mobile communication technology standard, and that provides a wireless communication function for the terminal device. Alternatively, the network device may be a new radio controller (new radio controller, NR controller), may be a gNodeB (gNodeB, gNB) in a 5G system, may be a central network element (central unit), may be a new radio base station, may be a remote radio unit, may be a micro base station (also referred to as a small cell), may be a relay (relay), may be a distributed network element (distributed unit), may be a macro base station in various forms, or may be a transmission reception point (transmission reception point, TRP), a transmission measurement function (transmission measurement function, TMF), a transmission point (transmission point, TP), or any other radio access device. Embodiments of this application are not limited thereto. The network device may also include a radio network controller (radio network controller, RNC), a NodeB (NodeB, NB), a base station controller (base station controller, BSC), a base transceiver station (base transceiver station, BTS), a home eNodeB (for example, a home evolved NodeB or a home NodeB, HNB), a baseband unit (baseband unit, BBU), a radio remote unit (remote radio unit, RRU), a wireless fidelity (wireless fidelity, Wi-Fi) access point (access point, AP), a baseband pool (BBU pool) and an RRU in a cloud radio access network (cloud radio access network, CRAN), or the like. A specific technology and a specific device form that are used by the network device are not limited in embodiments of this application. For example, the network device may correspond to the eNB in a 4G system, and correspond to the gNB in the 5G system.

In addition, the base station in embodiments of this application may include a central unit (central unit, CU) and a distributed unit (distributed unit, DU), and a plurality of DUs may be centrally controlled by one CU. The CU and the DU may be divided based on a protocol layer function that the CU and the DU each have in a wireless network. For example, functions of a packet data convergence protocol (packet data convergence protocol, PDCP) layer and a protocol layer above the packet data convergence protocol layer are set on the CU, and functions of protocol layers below the PDCP layer, for example, a radio link control (radio link control, RLC) layer and a medium access control (medium access control, MAC) layer, are set on the DU. It should be noted that division into the protocol layers is merely an example, and there may be division of other protocol layers. A radio frequency apparatus may be remotely deployed and not placed in the DU, may be integrated into the DU, or may be partially remotely disposed and partially integrated into the DU. This is not limited in embodiments of this application. In addition, in some embodiments, a control plane (control plane, CP) and a user plane (user plane, UP) of the CU may be separated into different entities for implementation, where the entities are respectively a control-plane CU entity (CU-CP entity) and a user-plane CU entity (CU-UP entity). In this network architecture, signaling generated by the CU may be sent to the terminal device through the DU, or signaling generated by UE may be sent to the CU through the DU. The DU may transparently transmit the signaling to the terminal device or the CU by directly encapsulating the signaling at a protocol layer without parsing the signaling. In the network architecture, the CU is divided as a network device on a RAN side. In addition, the CU may also be divided as a network device on a core network (core network, CN) side. This is not limited in this application.

Because embodiments of this application mainly relate to an access network device, the network device below is an access network device unless otherwise specified. A base station may represent the network device and/or the access network device below.

In embodiments of this application, an apparatus configured to implement a function of the network device may be a network device, or may be an apparatus, for example, a chip system, that can support the network device in implementing the function. The apparatus may be mounted in the network device. In the technical solutions provided in embodiments of this application, an example in which the apparatus configured to implement the function of the network device is the network device is used to describe the technical solutions provided in embodiments of this application.

(3) In this application, sidelink communication is communication performed between terminal apparatuses through a sidelink.

The following describes sidelink communication by using V2X communication as an example.

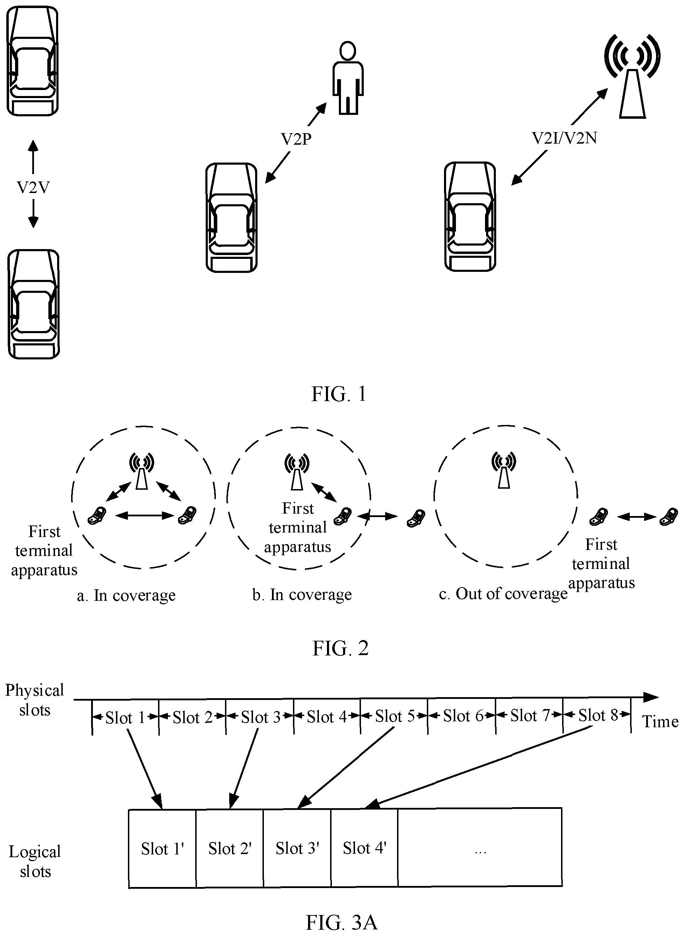

The V2X communication is intended for a high-speed device represented by a vehicle, and is a basic technology and a key technology that are to be used in a future scenario that has an extremely high communication delay requirement. Application fields of the V2X communication include an intelligent vehicle, self-driving, an intelligent transportation system, and the like. As shown in FIG. 1, a typical V2X communication scenario includes vehicle-to-vehicle (vehicle-to-vehicle, V2V) communication, vehicle-to-pedestrian (vehicle-to-pedestrian, V2P) communication, vehicle-to-infrastructure (vehicle-to-infrastructure, V2I) communication, or vehicle-to-network (vehicle-to-network, V2N) communication. For the V2V communication, a first terminal apparatus and/or a second terminal apparatus each may be a vehicle, a vehicle-mounted terminal apparatus located in the vehicle, or the like. For example, for the V2P communication, one of a first terminal apparatus and a second terminal apparatus may be a vehicle, a vehicle-mounted terminal apparatus located in the vehicle, or the like, and the other may be a terminal apparatus carried by a pedestrian, such as a mobile terminal or a wearable device. For the V2P communication, one of a first terminal apparatus and a second terminal apparatus may be a vehicle, a vehicle-mounted terminal apparatus located in the vehicle, or the like, and the other may be an infrastructure such as an RSU. For the V2N communication, one of a first terminal apparatus and a second terminal apparatus may be a vehicle, a vehicle-mounted terminal apparatus located in the vehicle, or the like, and the other may be a base station.

For example, the second terminal apparatus is a node for sending sidelink information. Based on the V2X communication, the second terminal apparatus may send state information such as a location and a speed of the second terminal apparatus, travel intent information such as turning, merging, or reversing, or information triggered by a periodic event or an aperiodic event to a surrounding terminal apparatus as sidelink data. Similarly, the second terminal apparatus may alternatively receive sidelink data from another surrounding terminal apparatus. In addition, the second terminal apparatus may further forward the sidelink data, received by the second terminal apparatus, from the another terminal apparatus. For example, the sidelink data and/or sidelink feedback information are/is carried on a PSSCH.

The V2X communication may support an in-coverage communication scenario and an out-of-coverage communication scenario. In scenarios in which the first terminal apparatus is in coverage shown by numbers a and b in FIG. 2, a network device scheduling mode may be used in a resource allocation manner used when the first terminal apparatus performs sending through the V2X communication. For example, a resource that is scheduled by a network device and that is used by a terminal apparatus to perform sidelink communication may be referred to as a licensed resource or a licensed frequency band. In a scenario in which the first terminal apparatus is out of coverage shown by a number c in FIG. 2, or in a case in which the first terminal apparatus is in coverage but does not use a network device scheduling mode, the first terminal apparatus may select a resource, to be specific, select, from a resource pool, a resource used for sidelink communication, where the resource may be referred to as an unlicensed resource or an unlicensed frequency band. It should be understood that the resource in this application may be replaced with a time-frequency resource and/or a time-frequency-code resource. In this application, the time-frequency resource includes a time domain resource and/or a frequency domain resource. The time-frequency-code resource includes at least one of a time domain resource, a frequency domain resource, and a code domain resource.

In coverage, the terminal apparatus may obtain SL resource pool (resource pool) configuration information and/or SL bandwidth part (bandwidth part, BWP) configuration information by receiving a system information block (system information block, SIB) of the network device, cell-specific (cell-specific) radio resource control (radio resource control, RRC) signaling, or UE-specific (UE-specific) RRC signaling of the terminal apparatus. Alternatively, the terminal apparatus may use preconfigured SL resource pool configuration information or SL BWP configuration information. For example, out of coverage, the terminal apparatus may use the preconfigured SL resource pool configuration information or SL BWP configuration information. The SL resource pool configuration information includes resource pool resource information, and the resource pool resource information indicates an SL resource pool. A resource pool is a set of time-frequency resources for sidelink communication between UEs. The resource pool may include a code domain resource. A resource in the resource pool includes a resource of at least one of the following physical channels that is used by the terminal apparatus for performing sending and receiving, for example, a PSCCH, a PSSCH, a PSDCH, a PSFCH, and a physical sidelink broadcast channel (physical sidelink broadcast channel, PSBCH). A type of a service carried on the PSSCH may include a unicast communication type, a multicast communication type, and/or a broadcast communication type. In time domain, the SL resource pool includes one or more time units. The time unit may be one or more symbols, one or more slots (slots), one or more mini-slots (mini-slots), one or more subframes, one or more frames, or the like. The one or more time units may be consecutive or discrete in terms of time. It should be understood that time domain units in a resource pool are logically consecutive.

As shown in FIG. 3A, a slot 1 to a slot 8 are consecutive slots in terms of time, and the slot is referred to as a physical slot (physical slot). Physical slots: the slot 1, the slot 3, the slot 5, and the slot 8 are configured as slots that belong to one resource pool. Slots included in a resource pool may be nonconsecutive in terms of time. Therefore, from a perspective of the resource pool, the slot 1, the slot 3, the slot 5, and the slot 8 in the physical slots respectively correspond to a slot 1', a slot 2', a slot 3', and a slot 4' in the resource pool. In this case, consecutive slots (namely, the slot 1', the slot 2', the slot 3', and the slot 4') included in the resource pool are logically consecutive slots in the resource pool, and the slots that are logically consecutive but not necessarily consecutive in terms of time are referred to as logical slots (logic slots). In frequency domain, the SL resource pool includes one or more frequency domain units. The frequency domain unit may be one resource element (resource element, RE), several REs, one resource block (resource block, RB), several RBs, one subchannel (subchannel), or several subchannels. A size of a subchannel indicates a quantity of one or more consecutive (continuous) or interlaced (interlaced) RBs included in one subchannel in frequency domain, and the quantity may be an integer such as 10, 12, 15, 20, 25, or 50.

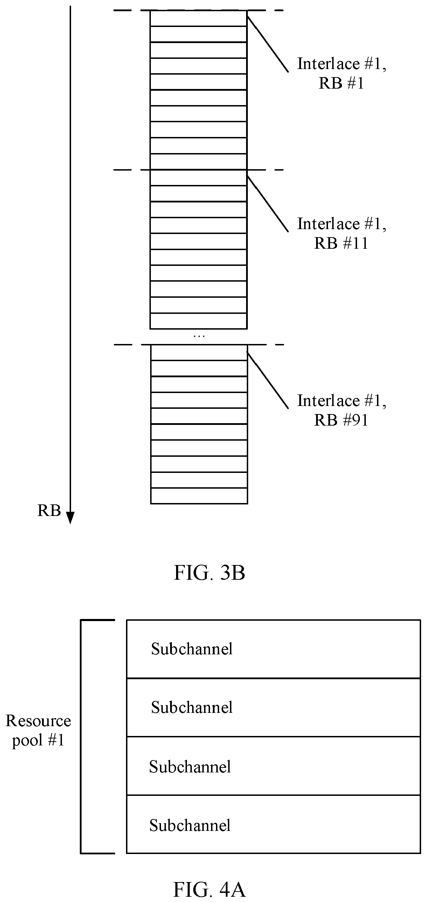

Interleaved RBs are one form of discrete RBs. For example, that a plurality of RBs included in one channel, one BWP, one resource pool, or a subchannel in the resource pool are interlaced means that any two adjacent RBs included in the subchannel are separated by at least one RB that does not belong to the subchannel. Specifically, an interlace (interlace) is defined as that one channel, one BWP, one resource pool, or a subchannel in the resource pool may include M interlaces. Sequence numbers of interlaced RBs included in an $m^{th}$ interlace ( $m \in \{0,1, ..., M - 1\}$) are $\{m, M + m, 2M + m, 3M + m, ... \}$. Generally, one interlace includes at least 10 interlaced RBs. A quantity of interlaced RBs included in one interlace may alternatively be less than 10. This is not limited herein. A value of M is related to a subcarrier spacing (subcarrier spacing, SCS). For example, as shown in FIG. 3B, when a 15 kilohertz (kHz) SCS is used, the value of M may be 10, and when a 30 kHz SCS is used, the value of M may be 5.

The SL resource pool configuration information may further include PSCCH configuration information. The PSCCH configuration information includes a quantity of symbols occupied by a PSCCH in one slot and a quantity of RBs occupied by a PSCCH in one subchannel. The SL BWP configuration information may include SL resource pool information that is used to configure a quantity of resource pools included in a BWP. The SL BWP configuration information may include SL bandwidth information that indicates a size of a bandwidth for SL communication, for example, indicates that an SL bandwidth is 20 megahertz (MHz).

The SL BWP configuration information may further include SL symbol information that indicates a start SL symbol location in one slot and a quantity of occupied consecutive SL symbols. The SL BWP configuration information may further include information about a subcarrier spacing and a cyclic prefix that are of an SL, and the information indicates a subcarrier spacing and a cyclic prefix that are used for SL communication. The cyclic prefix indicates an extended cyclic prefix or a normal cyclic prefix. In a possible configuration, the SL BWP configuration information may further include the SL resource pool configuration information. In this application, unless a meaning of the time unit is specially specified, a slot is used for description, but the time unit is not limited to only a slot. Unless a meaning of a time/frequency domain unit is specially specified, a subchannel is used for description, but the frequency domain unit is not limited to only a subchannel.

In a next-generation 5G NR system, NR protocol technologies in an unlicensed frequency band are collectively referred to as NR-U. The 3GPP organization expects to further improve corresponding Uu air interface communication performance through the NR-U.

On the unlicensed frequency band, a transmit end terminal apparatus accesses a signal in a contention manner, for example, in a channel access manner defined by the European Telecommunication Standards Institute (European Telecommunication Standards Institute, ETSI). A contention-based access manner mainly includes load-based equipment (load-based equipment, LBE) and frame-based equipment (frame-based equipment, FBE).

For access to the unlicensed frequency band, both the LBE and the FBE require the terminal apparatus to perform listen before talk (listen before talk, LBT). An LBT mechanism is essentially a channel access rule based on random back-off (random back-off). Before accessing a channel and starting to send data, UE needs to sense (sense) whether the channel is idle (idle). If the channel has been kept idle for a specific period of time, the UE can occupy the channel. If the channel is not idle, the UE can occupy the channel only after the channel is restored to idle. The reason why the LBT mechanism becomes a mandatory feature of the unlicensed frequency band is that there are regulation (regulation) requirements for use of the unlicensed frequency band in various regions of the world. UEs in various forms operating in different communication protocols can use the unlicensed frequency band only when regulations are met, to fairly and efficiently use a spectrum resource.

An LBT access manner usually uses energy-based detection and signal type-based detection. For the NR-U, the LBT access manner uses energy-based detection. A detection threshold (energy detection threshold) needs to be set for energy-based detection. When detected energy exceeds the detection threshold, it is determined that the channel is busy, and access to the channel is not allowed. When detected energy is lower than the detection threshold for a period of time, access to the channel is allowed. According to national and regional regulation requirements for use of the unlicensed frequency band, for example, on a 5 GHz frequency band, when a 20 MHz channel is accessed, the channel can be occupied only when a requirement of at least a minimum occupied channel bandwidth (occupied channel bandwidth, OCB) is met. Generally, the minimum OCB needs to be at least 80% of a normal bandwidth. 20 MHz is used as an example. At least a 16 MHz bandwidth needs to be occupied to preempt the 20 MHz channel. In an application, the detected energy may be reference signal received power (reference signal received power, RSRP), and correspondingly, the detection threshold may be an RSRP threshold.

The terminal apparatus or network device may use the following types (types) of LBT.

(1) Type 1 LBT (type 1 LBT): The terminal apparatus or network device can access a channel and send data only after performing random back-off.

Specifically, in the type 1 LBT, the terminal apparatus or network device may initiate transmission after sensing, for the first time in a sensing slot duration (sensing slot duration) of an extended duration (defer sensing, denoted as $T_d$), that the channel is idle, and after a counter N is set to 0 in step 104 below. Specifically, according to the following steps, the additional sensing slot duration is obtained by sensing the channel, to adjust the counter N.

Step 101: Set $N = N_{init}$, where $N_{init}$ is a random number evenly distributed between 0 and $CW_p$, and perform step 104.

Step 102: If N > 0, and the terminal apparatus or network device selects to decrease the counter, set N = N - 1.

Step 103: Sense the channel to obtain the additional sensing slot duration, and if the channel in the additional sensing slot duration is idle, go to step 104; otherwise, go to step 105.

Step 104: If N = 0, stop the procedure, otherwise, perform step 102.

Step 105: Sense the channel until it is sensed that the channel is busy in another $T_d$ or it is detected that the channel is idle in all sensing slots in another $T_d$.

Step 106: If it is detected that the channel is idle in all the sensing slots in the another $T_d$, perform step 104; otherwise, perform step 105.

In this application, $T_d$ includes a duration $T_f$ = 16 microseconds ($\mu s$), followed by $m_p$ consecutive sensing slot durations (denoted as $T_{sl}$), where $T_f$ includes an idle sensing slot duration $T_{sl}$ at a start of the duration.

$CW_{min,p} \le CW_p \le CW_{max,p}$ is a contention window.

The terminal apparatus or network device may select $CW_{min,p}$ and $CW_{max,p}$ before step 101 of the foregoing procedure.

$m_p$, $CW_{min,p}$, and $CW_{max,p}$ are based on a channel access priority $p$ associated with transmission of the terminal apparatus or network device, as shown in Table 1.

**Table 1**

| Channel access priority ($p$) | $m_p$ | $CW_{min,p}$ | $CW_{max,p}$ | $T_{m\,cot,p}$ | Allowed value of $CW_p$ |
|---|---|---|---|---|---|
| 1 | 1 | 3 | 7 | 2 milliseconds (*ms*) | {3,7} |
| 2 | 1 | 7 | 15 | 3 *ms* | {7,15} |
| 3 | 3 | 15 | 63 | 8 *ms* or 10 *ms* | {15,31,63} |
| 4 | 7 | 15 | 1023 | 8 *ms* or 10 *ms* | {15,31,63,127,255,511,1023} |

A channel occupancy time for transmission of the terminal apparatus or network device on the channel does not exceed $T_{m\,cot,p}$, where a channel access process is performed based on the channel access priority $p$ associated with transmission of the terminal apparatus or network device.

The terminal apparatus or network device may further maintain a contention window value $CW_p$, and adjust a value of $CW_p$ according to the following steps before step 101:

Step 106: For each priority class $p \in \{1,2,3,4\}$, set $CW_p = CW_{min,p}$.

Step 107: If at least 80% of HARQ ACK feedback values corresponding to data sent by the terminal apparatus or network device in a reference subframe *k* are determined as NACKs, the value of $CW_p$ corresponding to each priority class $p \in \{1,2,3,4\}$ is increased to a next higher allowed value, and the value is used in step 102; otherwise, perform step 101. The reference subframe *k* is a start subframe of latest transmission performed by the terminal apparatus or network device on the channel.

(2) Type 2A LBT (type 2A LBT): The terminal apparatus or network device that uses the type 2A LBT may access a channel and send data after sensing that the channel is idle for at least 25 $\mu s$.

(3) Type 2B LBT (type 2B LBT): The terminal apparatus or network device that uses the type 2B LBT may access a channel and send data after sensing that the channel is idle for at least 16 $\mu s$.

(4) Type 2C LBT (type 2C LBT): The terminal apparatus or network device that uses the type 2C LBT does not need to sense a channel, and may directly access the channel and send data after a switching gap of at most 584 $\mu s$ in the COT.

After accessing the channel through LBT, the transmit end terminal apparatus may determine, through resource selection, a time-frequency resource for sending the data.

In this application, the foregoing types of LBT may be used to perform channel access on an unlicensed frequency band in the channel access manner. However, channel access performed on an unlicensed frequency band in another channel access manner allowed by other national/regional laws and regulations is not limited in this application.

In this application, a time-frequency resource for sidelink communication (or a resource for short) is a time-frequency resource, for sidelink communication, in a resource pool, and the transmit end terminal apparatus may send SL information on the resource. One resource may carry one or more of reference signals such as a PSCCH, a PSSCH, a PSFCH, and a demodulation reference signal (demodulation reference signal, DMRS). A time domain scheduling unit of a sidelink resource may be one slot, or may be one mini-slot. A frequency domain scheduling unit may be a channel, a subchannel (subchannel), or one interlace, or may be one or more consecutive (continuous) or interlaced RBs.

Specifically, SCI may include first-stage SCI and/or second-stage SCI. The PSCCH may carry first-stage SCI (first-stage SCI), and the PSSCH may carry second-stage SCI (second-stage SCI). Optionally, the PSSCH may further carry a medium access control (medium access control, MAC) control element (control element, CE) and data. The first-stage SCI may be used to schedule the PSSCH, and may be further used to schedule the second SCI, the MAC CE, and/or the data. The second-stage SCI may be used to decode the PSSCH, and may also be used to provide related information, for assisting SL communication, including but not limited to information related to resource allocation, for example, a time-frequency resource unit set. An S-SSB may include an SL synchronization signal and a PSBCH.

For example, the transmit end terminal apparatus may send the SL information in a first frequency band (band), a first carrier (carrier), a first BWP, or a first resource pool. A frequency domain resource in the first frequency band, the first carrier, the first BWP, a first channel, or the first resource pool is a frequency domain resource in an unlicensed frequency band, and a center frequency and a corresponding bandwidth of the unlicensed frequency band are determined according to laws and regulations released by international organizations or institutions, national governments, or regional governments. A possible subordinate relationship is: The first frequency band includes the first carrier, the first carrier includes the first bandwidth part, and the first bandwidth part includes the first resource pool; and similarly, a second frequency band includes a second carrier, the second carrier includes a second bandwidth part, and the second bandwidth part includes a second resource pool.

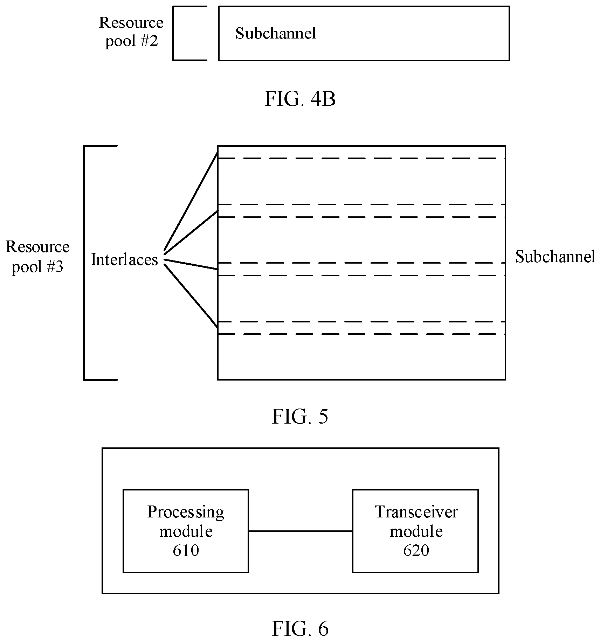

Optionally, one resource pool may include at least two 20 MHz channels or subchannels. For example, as shown in FIG. 4A, a resource pool #1 includes four 20 MHz subchannels. Alternatively, one resource pool may include only one 20 MHz channel or subchannel, for example, a resource pool #2 shown in FIG. 4B. One 20 MHz channel or subchannel may further include several interlaces. For example, as shown in FIG. 5, a resource pool #3 includes interlaces in one 20 MHz resource channel.

For example, the transmit end terminal apparatus triggers resource allocation in a mode (mode) 2 at a moment of a slot n, and performs sensing (sensing) and resource selection to determine a time-frequency resource for sending data. Specific steps are as follows.

Step 201: Determine a resource selection window (resource selection window, RSW). For example, the resource selection window is represented as $[n + T_1, n + T_2]$.

In this application, $T_1$ satisfies $0 \leq T_1 \leq T_{proc,1}^{SL}$. $T_2$ satisfies $T_{2min} \leq T_2 \leq PDB$. *PDB* indicates a value of a packet delay budget (packet delay budget, PDB). $T_{proc,1}^{SL}$ indicates a delay in processing resource selection and data sending of the transmit end terminal apparatus. Specifically, $T_{proc,1}^{SL}$ may indicate a quantity of slots required by the transmit end terminal apparatus to process resource selection and data sending. n indicates a moment (or a slot) for triggering the transmit end terminal apparatus to perform resource selection. A smaller value of the PDB indicates a more urgent delay requirement of this service, that is, a shorter delay. It may be understood that the value of the PDB decreases with time. If the SL information cannot be correctly received by a receive terminal before the PDB decreases to 0, the SL information fails to be sent.

Optionally, $T_{proc,1}^{SL}$ is related to a subcarrier spacing $\mu_{SL}$ corresponding to the transmit end terminal apparatus. For example, the subcarrier spacing $\mu_{SL}$ corresponding to the transmit end terminal apparatus is a subcarrier spacing used for sending data.

For example, as shown in Table 2, $T_{proc,1}^{SL}$ one-to-one corresponds to $\mu_{SL}$:

**Table 2**

| $\mu_{SL}$ | $T_{proc,1}^{SL}$ (unit: slot) |
|---|---|
| 0 | 3 |
| 1 | 5 |
| 2 | 9 |
| 3 | 17 |

Step 202: The transmit end terminal apparatus determines a sensing window (sensing window). For example, the sensing window is represented as $[n - T_0, n - T_{proc,0}^{SL})$ .

In this application, $T_{proc,0}^{SL}$ indicates a delay in processing a sensing result by the transmit end terminal apparatus. Specifically, $T_{proc,0}^{SL}$ may indicate a quantity of slots required by the transmit end terminal apparatus to process the sensing result. $T_0$ is a positive integer.

Optionally, $T_{proc,0}^{SL}$ and/or $T_0$ are/is related to the subcarrier spacing $\mu_{SL}$ corresponding to the transmit end terminal apparatus.

For example, as shown in Table 3, $T_{proc,0}^{SL}$ one-to-one corresponds to $\mu_{SL}$:

**Table 3**

| $\mu_{SL}$ | $T_{proc,0}^{SL}$ (unit: slot) |
|---|---|
| 0 | 1 |
| 1 | 1 |
| 2 | 2 |
| 3 | 4 |

It should be understood that there is no strict execution sequence limitation between step 201 and step 202.

Step 203: The transmit end terminal apparatus determines an RSRP threshold.

The RSRP threshold is related to a priority $prio_{TX}$ of to-be-sent data of the transmit end terminal apparatus, and is further related to a priority $prio_{RX}$ indicated by received SCI. The RSRP threshold may be specifically an RSRP threshold corresponding to a ($prio_{RX}$ + ($prio_{TX}$ - 1) * 8 )th index (index) in an RSRP threshold set configured for a resource pool. A unit of the RSRP threshold may be decibel (dB).

Step 204: The transmit end terminal apparatus initializes an available resource set $S_A$. Initialized $S_A$ may be a set of all time-frequency resource units in the resource selection window. For example, one time-frequency resource unit in this application may include one time domain scheduling unit in time domain and one frequency domain scheduling unit in frequency domain.

Step 205: Exclude a corresponding resource from $S_A$ when all the following conditions are met.

(a) The transmit end terminal apparatus does not sense a slot of the time-frequency resource unit in the sensing window. For example, the slot is a slot in which the transmit end terminal apparatus is in a sending state. Due to a limitation of a half-duplex transceiver, when the transmit end terminal apparatus is in the sending state, receiving cannot be performed. Therefore, the sending slot cannot be sensed.

(b) It is assumed that the transmit end terminal apparatus detects, in the slot of the time-frequency resource unit, SCI sent by another terminal device, and that the SCI indicates a periodic resource reservation, the periodic resource reservation corresponds to all subchannels in a slot in the selection window. A periodic resource reservation value used by the SCI includes periodic reservation values configured for all resource pools.

Step 205a: If a time-frequency resource excluded from $S_A$ is less than X% of total time-frequency resources in the resource selection window, perform step 204 and step 205 again. A value of X% is greater than 0. The value of X % may be configured or preconfigured by the network device, for example, X%=20%. This is not limited.

Step 206: Exclude a corresponding resource from $S_A$ when all the following conditions are met.

(a) Received first-stage SCI is successfully decoded.

(b) RSRP measurement is performed on a DMRS of a PSCCH or a PSSCH included in a time-frequency resource that is reserved based on the received first-stage SCI and that is used to transmit a PSSCH (including a periodically reserved time-frequency resource for new transmission and/or retransmission of the PSSCH and an aperiodically reserved time-frequency resource for new transmission and/or retransmission of the PSSCH), where an RSRP result is greater than the RSRP threshold determined in step 203.

(c) A time-frequency resource (including reservations in a plurality of consecutive periods and reservations of a TRVI and an FRVI) reserved based on the received first-stage SCI is in the resource selection window.

Step 207: If a remaining time-frequency resource is less than X % of the total time-frequency resources in the resource selection window after the time-frequency resource is excluded from $S_A$, increase the RSRP threshold determined in step 203 (by 3 dB each time), and perform step 204 to step 207 again.

Step 208: The transmit end terminal apparatus randomly selects a time-frequency resource $(r_0, r_1, r_2, ...)$ from $S_A$ for sending data, performs resource re-evaluation on $(r_0, r_1, r_2, ... )$ before sending the data, and performs, after re-evaluation, preemption detection on a resource ( $r'_0, r'_1, r'_2, \cdots$ ) selected from $S_A$.

The transmit end terminal apparatus performs resource re-evaluation and preemption detection at a moment of at least a slot m-$T_3$ ( $T_3 = T_{proc,1}^{SL}$ ). The transmit end terminal apparatus may additionally trigger resource re-evaluation and/or preemption detection before and after the slot m-$T_3$ based on an implementation. A manner of determining whether $(r_0, r_1, r_2, ... )$ and ( $r'_0, r'_1, r'_2, \cdots$ ) need to be excluded is the same as that in steps 201 to 207. If $r_i$ and/or $r'_i$ in $(r_0, r_1, r_2, ...)$ and ( $r'_0, r'_1, r'_2, \cdots$ ) do/does not belong to $S_A$ (that is, $r_i$ and $r'_i$ are respectively excluded during re-evaluation and/or preemption detection), $r_i$ and/or $r'_i$ are/is reselected. A slot m is a next slot to be sent, that is, the slot m belongs to $(r_0, r_1, r_2, ...)$ and ( $r'_0, r'_1, r'_2, \cdots$ ).

Therefore, in the process of determining the time-frequency resource for sending the data, the transmit end terminal apparatus needs to exclude, from $S_A$, a time-frequency resource that is reserved based on SCI of another terminal apparatus and that is used to transmit a PSSCH. However, for an unlicensed spectrum, only a terminal apparatus that accesses a channel through LBT can perform sending. In other words, the time-frequency resource excluded by the transmit end terminal apparatus from $S_A$ includes a time-frequency resource reserved by a terminal apparatus that cannot perform sending on the channel, and the time-frequency resource does not collide with the time-frequency resource used by the transmit end terminal apparatus to send the data. Therefore, if the transmit end terminal apparatus does not exclude the time-frequency resource from $S_A$, resource reservation information of another terminal cannot be ensured. As a result, a high-QoS service requirement (including high reliability and a low delay) of the another terminal cannot be met, and system reliability is reduced. If the transmit end terminal apparatus excludes the time-frequency resource from $S_A$ according to step 201 to step 208, excessive time-frequency resources may be excluded. In addition, LBT causes uncertainty of channel access on the unlicensed frequency band, and another terminal may fail to send information on a reserved time-frequency resource. As a result, the transmit end terminal apparatus may fail to determine sufficient time-frequency resources to send the data, or a channel in the unlicensed frequency band is occupied. This reduces resource utilization and affects communication performance.

Embodiments of this application provide a resource determining method, to improve sidelink communication reliability and reduce a communication delay. The method may be performed by a first terminal apparatus and a second terminal apparatus. The first terminal apparatus and/or the second terminal apparatus each may be a terminal apparatus or a component in the terminal apparatus (such as a chip, a module, or an interface circuit). For example, the first terminal apparatus is used as a transmit end terminal apparatus, and the second terminal apparatus is used as a receive end terminal apparatus. Therefore, in this application, the first terminal apparatus may send first data, and optionally, the second terminal apparatus may receive the first data. It should be understood that there may be one or more second terminal apparatuses. The first terminal apparatus and the second terminal apparatus share one COT.

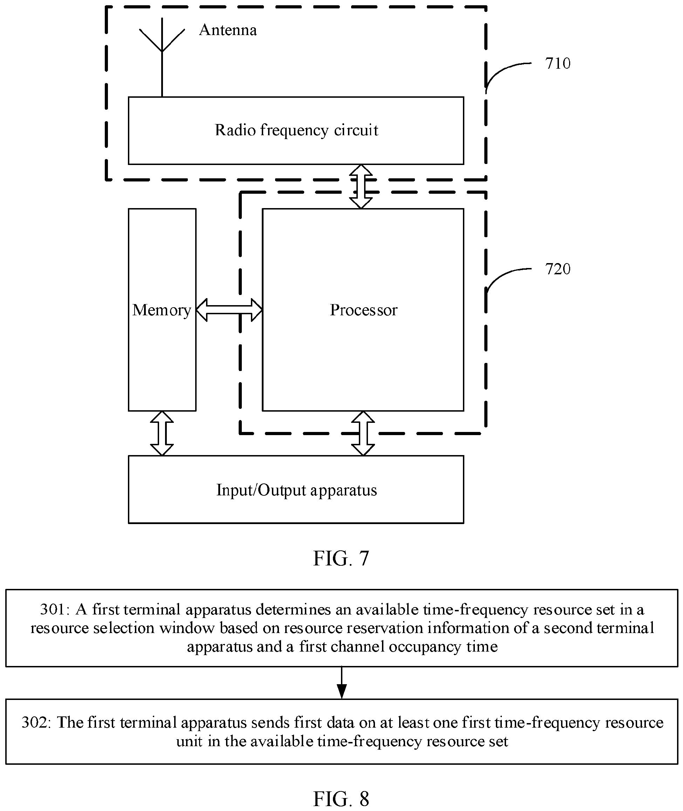

FIG. 6 and FIG. 7 each are a diagram of a structure of a terminal apparatus according to an embodiment of this application. The terminal apparatus is configured to implement the communication method provided in embodiments of this application.

For example, FIG. 6 is a diagram of a structure of a possible terminal apparatus. The terminal apparatus may be configured to implement the first terminal apparatus and/or the second terminal apparatus in this application. The structure may include a processing module (or a processing unit) 610 and a transceiver module (or a communication unit or communication module) 620. For example, the structure shown in FIG. 6 may be a terminal device, or may be a chip used in the terminal device, or another combined device or part (or referred to as a component) having a function of the terminal device shown in this application. When the structure is the terminal device, the transceiver module 620 may be a transceiver, and the transceiver may include an antenna, a radio frequency circuit, and the like; and the processing module 610 may be a processor, for example, a baseband processor, where the baseband processor may include one or more central processing units (central processing units, CPUs). When the structure is the part having the function of the terminal device shown in this application, the transceiver module 620 may be a radio frequency unit, and the processing module 610 may be a processor, for example, a baseband processor. When the structure is a chip system, the transceiver module 620 may be an input/output interface of a chip (for example, a baseband chip), and the processing module 610 may be a processor of the chip system, and may include one or more central processing units. It should be understood that, in this embodiment of this application, the processing module 610 may be implemented by a processor or a processor-related circuit component, and the transceiver module 620 may be implemented by a transceiver or a transceiver-related circuit component.

For example, the processing module 610 may be configured to perform all operations, such as a processing operation, except for receiving and sending operations performed by the first terminal apparatus and/or the second terminal apparatus in any embodiment of this application, and/or configured to support another process of the technology described in this specification, for example, generate a message, information, and/or signaling that are/is sent by the transceiver module 620, and process a message, information, and/or signaling that are/is received by the transceiver module 620. The transceiver module 620 may be configured to perform all receiving and sending operations performed by the first terminal apparatus and/or the second terminal apparatus in any embodiment of this application, and/or configured to support another process of the technology described in this specification, for example, data sending and/or receiving.

In addition, the transceiver module 620 may be a functional module, and the functional module can complete both a sending operation and a receiving operation. For example, the transceiver module 620 may be configured to perform all sending operations and receiving operations performed by a relay node and/or a remote node. For example, when performing the sending operation, the transceiver module 620 may be considered as a sending module, and when performing the receiving operation, the transceiver module 620 may be considered as a receiving module. Alternatively, the transceiver module 620 may be two functional modules. The transceiver module 620 may be considered as a general term of the two functional modules. The two functional modules are respectively a sending module and a receiving module. The sending module is configured to complete a sending operation, for example, the sending module may be configured to perform all sending operations performed by the first terminal apparatus and/or the second terminal apparatus. The receiving module is configured to complete a receiving operation, and the receiving module may be configured to perform all receiving operations performed by a relay node and/or a remote node.

FIG. 7 is a diagram of a structure of another terminal apparatus. The terminal apparatus is configured to perform actions performed by the first terminal apparatus and/or the second terminal apparatus provided in embodiments of this application. For ease of understanding and convenience of figure illustration, as shown in FIG. 7, the terminal apparatus may include a processor, a memory, a radio frequency circuit, an antenna, and an input/output apparatus. The processor is mainly configured to: process a communication protocol and communication data, control the terminal apparatus, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to receive or send a radio frequency signal in a form of an electromagnetic wave. The input/output apparatus such as a touchscreen, a display, or a keyboard, is mainly configured to: receive data input by a user and output data to the user. It should be noted that some types of terminal apparatuses may have no input/output apparatus.

When data needs to be sent, the processor performs baseband processing on the to-be-sent data, and then outputs a baseband signal to the radio frequency circuit. The radio frequency circuit performs radio frequency processing on the baseband signal, and then sends a radio frequency signal in a form of an electromagnetic wave through the antenna. When data is sent to the terminal apparatus, the radio frequency circuit receives a radio frequency signal through the antenna, converts the radio frequency signal into a baseband signal, and outputs the baseband signal to the processor. The processor converts the baseband signal into data, and processes the data. For ease of description, only one memory and one processor are shown in FIG. 7. In an actual terminal device product, there may be one or more processors and one or more memories. The memory may also be referred to as a storage medium, a storage device, or the like. The memory may be disposed independently of the processor, or may be integrated with the processor. This is not limited in embodiments of this application.

In this embodiment of this application, the antenna and the radio frequency circuit that have sending and receiving functions may be considered as a transceiver unit of the terminal apparatus (the transceiver unit may be one functional unit, and the functional unit can implement a sending function and a receiving function; or the transceiver unit may include two functional units: a receiving unit that can implement a receiving function and a sending unit that can implement a sending function), and the processor having a processing function may be considered as a processing unit of the terminal apparatus. As shown in FIG. 7, the terminal apparatus includes a transceiver unit 710 and a processing unit 720. The transceiver unit may also be referred to as a transceiver, a transceiver machine, a transceiver apparatus, or the like. The processing unit may also be referred to as a processor, a processing board, a processing module, a processing apparatus, or the like. Optionally, a device that is in the transceiver unit 710 and that is configured to implement a receiving function may be considered as a receiving unit, and a device that is in the transceiver unit 710 and that is configured to implement a sending function may be considered as a sending unit. In other words, the transceiver unit 710 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 710 may correspond to the transceiver module 620, or the transceiver module 620 may be implemented by the transceiver unit 710. The transceiver unit 710 is configured to perform a sending operation and a receiving operation of the first terminal apparatus and/or the second terminal apparatus in embodiments of this application, and/or configured to support another process of the technology described in this specification. The processing unit 720 may correspond to the processing module 610, or the processing module 610 may be implemented by the processing unit 720. The processing unit 720 is configured to perform another operation, except for receiving and sending operations, of the first terminal apparatus and/or the second terminal apparatus in embodiments of this application, for example, configured to perform all operations, except for receiving and sending, performed by the first terminal apparatus and/or the second terminal apparatus in embodiments of this application, and/or configured to support another process of the technology described in this specification.

It should be understood that the communication method provided in embodiments of this application may be implemented by the first terminal apparatus and the second terminal apparatus. The first terminal apparatus may be used as a transmit end terminal apparatus or a component in the transmit end terminal apparatus, and the second terminal apparatus may be used as a receive end terminal apparatus or a component in the receive end terminal apparatus.

Structures of the first terminal apparatus and the second terminal apparatus are shown in FIG. 6 and/or FIG. 7. The transceiver module 620 and/or the transceiver unit 710 may be configured to perform a sending operation and a receiving operation that are performed by the first terminal apparatus and/or the second terminal apparatus in the communication method. The processing module 610 and/or the processing unit 720 may be configured to perform the processing operation and all the operations, except for receiving and sending, that are performed by the first terminal apparatus and/or the second terminal apparatus in the communication method.

In the following, unless otherwise specified, at a moment, the first terminal apparatus and the transmit end terminal apparatus may be replaced with each other, and the second terminal apparatus and the receive end terminal apparatus may be replaced with each other. It should be noted that, in this application, that the first terminal apparatus sends SL information to the second terminal apparatus includes that the first terminal apparatus sends the SL information to the second terminal apparatus in a unicast, multicast, or broadcast mode. In multicast or broadcast communication, a receive end of the first terminal apparatus may further include another terminal apparatus, and the another terminal apparatus may include another second terminal apparatus. At another moment, that the second terminal apparatus may alternatively send SL information as another transmit end terminal apparatus includes that the second terminal apparatus sends data to another terminal apparatus in a unicast, multicast, or broadcast mode. The first terminal apparatus may receive the SL information sent by the second terminal apparatus at the moment. The first terminal apparatus and the second terminal apparatus share one COT, in other words, a terminal apparatus that does not share the COT with the first terminal apparatus does not belong to the second terminal apparatus. It may be understood that one terminal apparatus may be a transmit end terminal apparatus or a receive end terminal apparatus at different moments.

In this application, the shared COT may be understood as that an initial terminal apparatus (which performs channel access through type 2 LBT) sharing the COT indicates, by sending an indication to at least one other terminal apparatus, that the at least one other terminal apparatus may perform channel access through the type 2 LBT in the shared COT for sending. The initial terminal apparatus herein may be the first terminal apparatus.

As shown in FIG. 8, a communication method provided in an embodiment of this application may include the following steps.

Step 301: A first terminal apparatus determines an available time-frequency resource set in a resource selection window based on resource reservation information of a second terminal apparatus and a first channel occupancy time.

The resource reservation information of the second terminal apparatus may indicate a first time-frequency resource set used by the second terminal apparatus to send second data. The resource reservation information may indicate a periodically reserved time-frequency resource, an aperiodically reserved time-frequency resource of the second terminal apparatus, or the like. This is not specifically limited. At least one time-frequency resource in the first time-frequency resource set may be used for initial transmission and/or retransmission of the second data. The second data may be transmitted on at least one PSSCH, that is, the second data may be transmitted on a plurality of PSSCHs, where the plurality of PSSCHs may be consecutive or discrete in terms of time. The first terminal apparatus may learn, based on the resource reservation information, that the second terminal apparatus makes a reservation to send data in the first time-frequency resource set. For example, the resource reservation information may be included in SCI of the second terminal apparatus. Optionally, the resource reservation information may indicate a time-frequency resource unit, for sending the second data, in the first time-frequency resource set, and/or indicate a symbol location, for performing sending, in the time-frequency resource unit for sending the second data, where the symbol location includes a start symbol and/or a length of consecutively occupied symbols. One time-frequency resource unit may include one subframe, one mini-slot (one mini-slot may include several symbols), or a time domain scheduling unit of another granularity in time domain. This is not limited in this application. The time-frequency resource unit includes one RB, a plurality of RBs, one subchannel, one channel, or a frequency domain scheduling unit of another granularity in frequency domain. The time-frequency resource unit for sending the second data includes at least one time-frequency resource unit.

Optionally, a channel on which the first terminal receives the resource reservation information may be the same as or different from a channel on which the first time-frequency resource set indicated by the source reservation information is located. The channel on which the first terminal receives the resource reservation information may also be the same as a channel on which a part of frequency domain resources in the first time-frequency resource set indicated by the source reservation information are located, and may also be different from a channel on which the other part of frequency domain resources are located. This is not limited in this application.

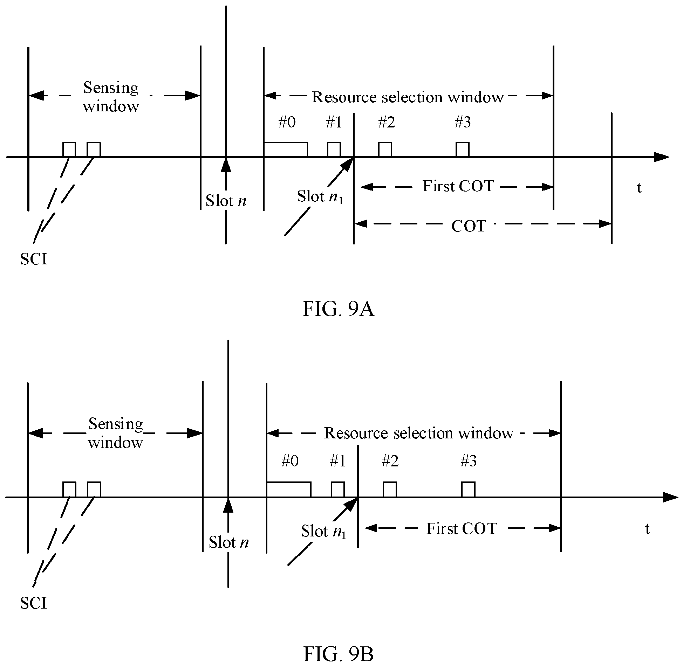

For example, as shown in FIG. 9A, the resource reservation information may include at least one piece of SCI that is of the second terminal apparatus and that is sensed by the first terminal apparatus in a sensing window (or the resource reservation information may be carried in the SCI). The at least one piece of SCI may indicate reservations of the second terminal apparatus for a time-frequency resource #1, a time-frequency resource #2, and a time-frequency resource #3. In this case, the first time-frequency resource set may include the time-frequency resource #1, the time-frequency resource #2, and the time-frequency resource #3. The time-frequency resource #1, the time-frequency resource #2, and the time-frequency resource #3 are respectively represented as #1, #2, and #3 in FIG. 9A. It should be understood that the at least one piece of SCI may be from at least one second terminal apparatus. A time domain location of the sensing window may use an existing definition, or may use another definition. Details are described below with reference to a channel access process and a resource determining process.

In this application, the first channel occupancy time is a COT shared by the first terminal apparatus and the second terminal apparatus.

In this application, that the first terminal apparatus and the second terminal apparatus share the channel occupancy time means that the first terminal apparatus and the second terminal apparatus can perform data transmission in the channel occupancy time determined by the first terminal apparatus and/or the second terminal apparatus. If the first terminal apparatus determines to share the channel occupancy time with the second terminal apparatus, the first terminal apparatus may use, as the first channel occupancy time, a channel occupancy time that can be used to perform sending, that is determined in the channel access process, and that is in the resource selection window. In other words, the first channel occupancy time is in the resource selection window determined by the first terminal apparatus. In addition, in this application, if the channel occupancy time shared by the first terminal apparatus and the second terminal apparatus includes a part outside the resource selection window of the first terminal apparatus, a channel occupancy time of this part does not belong to the first channel occupancy time. It may be understood that, when being in the resource window is described in the present invention, being in the resource window includes being in a start slot and/or an end slot of the resource window.

In a possible implementation, the first terminal apparatus may determine, based on a service requirement of the first terminal apparatus, to share the channel occupancy time with the second terminal apparatus. For example, when the first terminal apparatus has a requirement of communicating with the second terminal apparatus (for example, including at least one communication information requirement of unicast, multicast, or broadcast), the first terminal apparatus may determine to share the channel occupancy time with the second terminal apparatus. The service requirement of the first terminal apparatus includes but is not limited to: A PDB of the first terminal apparatus and a PDB of the second terminal apparatus are considered, for example, the PDB of the second terminal apparatus expires in the channel occupancy time, or is about to expire after the channel occupancy time ends (which may be determined by comparing with a PDB threshold that is predefined, preconfigured, configured on a network, or configured between terminal apparatuses), and if the channel occupancy time is not shared, the PDB of the second terminal apparatus cannot meet the requirement, the PDB of the first terminal apparatus has a margin (which may be determined by comparing with a PDB threshold that is predefined, preconfigured, configured on a network, or configured between terminal apparatuses), and expiration of the PDB is not affected even if no transmission is performed in the channel occupancy time; alternatively, a priority value of a PSSCH transmitted or to be transmitted by the second terminal apparatus is less than or equal to a priority threshold, or is less than or equal to a priority of a PSSCH transmitted or to be transmitted by one first terminal apparatus. It may be understood that the priority value indicates the priority. A representation manner is that a smaller priority value indicates a higher priority. For example, the priority value may be 1, 2, ..., 7, 8, and a priority that is of SL information and that corresponds to the priority value 1 is higher than a priority that is of SL information and that corresponds to the priority value 2. Another method for representing a higher or lower priority is not limited in this application.

In another implementation, a network device such as a base station may send indication information to the first terminal apparatus based on RRC signaling or a MAC CE, another terminal apparatus may send indication information to the first terminal apparatus based on SCI, or the first terminal apparatus indicates, based on preconfigured indication information, the first terminal apparatus to share the channel occupancy time with the second terminal apparatus. In this case, after determining the first channel occupancy time, the first terminal uses the first channel occupancy time as the channel occupancy time shared by the first terminal apparatus and the second terminal apparatus. The indication information may include an identifier of the second terminal apparatus. The indication information may further include a duration of the first channel occupancy time (for example, the indication information includes information about a quantity of slots included in the first channel occupancy time). Alternatively, the indication information may be preconfigured in the first terminal apparatus. The identifier of the second terminal apparatus may include at least one of a second terminal apparatus identifier (UE ID) and a source identifier (source ID), a destination identifier (destination ID), or a group identifier of the second terminal apparatus, and may also include an identifier in another form for distinguishing between the first terminal apparatus and/or the second terminal apparatus, and/or an identifier of a PSCCH sent and/or received by the first terminal apparatus and/or the second terminal apparatus.

Optionally, the first terminal apparatus may send first information to the second terminal apparatus. The first information may include the identifier of the second terminal apparatus and information (which may be referred to as second information) indicating at least one time-frequency resource unit in a first part of time-frequency resource units. Further, optionally, the first information may further indicate the duration of the first channel occupancy time. It may be understood that the first information is the indication information indicating the first terminal apparatus to share the channel occupancy time, and indicates that the second terminal apparatus can share the channel occupancy time determined by the first terminal apparatus. The first information further includes LBT access information indicating the second terminal apparatus to switch an LBT type, for example, indicating to switch from type 1 LBT to type 2 LBT, so that the second terminal apparatus can access a channel through the type 2 LBT, and send SL information in the shared channel occupancy time.

If the first information from the first terminal apparatus is received, the second terminal apparatus does not need to access the channel through the type 1 LBT, but can enter the channel through the type 2 LBT, obtains the shared channel occupancy time, and can send data (referred to as third data) based on the at least one time-frequency resource unit in the first part of time-frequency resource units indicated by the first information. The third data may be a part of the second data, or may be all of the second data.

In addition, that the first terminal apparatus and the second terminal apparatus each determine a channel occupancy time on a first channel is not limited in this application.

In a possible example, the first channel occupancy time is in the resource selection window determined by the first terminal apparatus, and the resource selection window may be determined after the first terminal apparatus accesses the first channel. A time domain location of the resource selection window may use an existing definition, or may use another definition. Details are described below with reference to a channel access process and a resource determining process.

For example, as shown in FIG. 9A, the first channel occupancy time (represented as the first COT in FIG. 9A) is in the resource selection window determined by the first terminal apparatus. Optionally, the first terminal apparatus determines the resource selection window. The first terminal apparatus determines the COT after accessing the first channel, and determines the first COT based on the COT and the resource selection window. Optionally, the COT may be determined in a determining manner of an existing LBT mechanism. For example, the COT is determined in a manner of accessing a channel in an LBT manner of the type 1 LBT. For example, a maximum value of the COT may be determined based on a maximum channel occupancy time $T_{m\,cot,p}$, and $p$ indicates a channel access priority of the first terminal apparatus. $T_{m\,cot,p}$ may indicate a maximum time domain length of the first channel occupancy time, in other words, a length of the first COT does not exceed $T_{m\,cot,p}$. For example, the channel accessed by the first terminal apparatus is the first channel, and $p$ indicates a channel access priority of the first terminal apparatus on the first channel. For example, for a correspondence between $T_{m\,cot,p}$ and $p$, refer to Table 1 in this application.

Optionally, the first terminal apparatus accesses the channel through LBT, and determines the first COT in the resource selection window, where the length of the first COT does not exceed $T_{m\,cot,p}$. For example, in FIG. 9B, the first terminal apparatus may directly determine the first COT instead of determining the COT and then determining the first COT based on the COT and the resource selection window.

In addition, the first part of time-frequency resource units in the first time-frequency resource set may be in the first channel occupancy time. It may be understood that the first part of time-frequency resource units may be all time-frequency resources in the first time-frequency resource set, or may be a part of time-frequency resources in the first time-frequency resource set, and the other part of time-frequency resources (for example, a second part of time-frequency resource units) may be outside the first channel occupancy time. FIG. 9A is still used as an example. The time-frequency resource #2 and the time-frequency resource #3 in the first time-frequency resource set are in the first channel occupancy time, and the time-frequency resource #1 is outside the first channel occupancy time. In this case, the first part of time-frequency resource units include the time-frequency resource #2 and the time-frequency resource #3, but do not include the time-frequency resource #1.

Optionally, the available time-frequency resource set determined by the first terminal apparatus in S301 does not include the at least one time-frequency resource unit in the first part of time-frequency resource units. For example, the available time-frequency resource set does not include the time-frequency resource #2 and/or the time-frequency resource #3 that are/is shown in FIG. 9A.

In addition, optionally, it is assumed that the first terminal apparatus accesses the first channel in a slot $n_1$, where n1 is greater than n. The available time-frequency resource set does not include a time-frequency resource unit whose time domain location is before the slot n1 in the resource selection window. FIG. 9A is still used as an example. If a time domain location of a time-frequency resource #0 (represented as #0) in FIG. 9A is before the slot n1, the available time-frequency resource set does not include the time-frequency resource #0.

Step 302: The first terminal apparatus sends first data on at least one first time-frequency resource unit in the available time-frequency resource set.

It should be understood that, for ease of description, an example in which the first terminal apparatus sends the first data is used in descriptions of related steps in embodiments of the present invention. However, that the first terminal apparatus sends only the first data is not limited in the present invention, and that the first terminal apparatus sends SL information is also included.

The first terminal apparatus may perform sending at any time domain location of the first time-frequency resource unit, or the first data may occupy any time domain location of the first time-frequency resource unit. For example, the first time-frequency resource unit is a slot. The first data may occupy some or all OFDM symbols in a slot included in the at least one first time-frequency resource unit.

Optionally, the first data may be received by the second terminal apparatus, or may be received by another terminal apparatus. This is not specifically limited.

According to the procedure shown in FIG. 8, the first terminal apparatus may determine an available time-frequency resource unit based on the first channel occupancy time and a time-frequency resource reserved by the second terminal apparatus that shares the first channel occupancy time with the first terminal apparatus. When excluding a time-frequency resource occupied by another terminal apparatus, the first terminal apparatus does not need to exclude a time-frequency resource unit reserved by another terminal apparatus except for the second terminal apparatus, to prevent excessive time-frequency resource units from being excluded. This can improve resource utilization and reduce a sidelink communication delay while improving communication reliability.

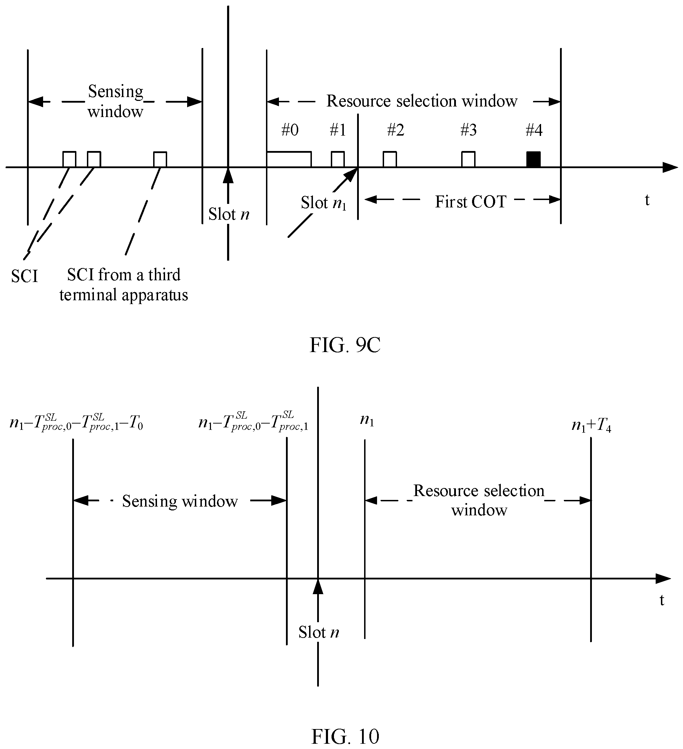

For example, as shown in FIG. 9C, even if the first terminal apparatus that accesses the first channel detects SCI from a third terminal apparatus in the sensing window, where the SCI indicates that a time-frequency resource unit #4 in the resource selection window of the first terminal apparatus is reserved by the third terminal apparatus, because the second terminal apparatus does not include the third terminal apparatus, the third terminal apparatus actually does not transmit SL data on the time-frequency resource unit #4. Therefore, when excluding an unavailable time-frequency resource unit from the resource selection window, the first terminal apparatus does not need to exclude the time-frequency resource unit #4, in other words, the first terminal apparatus does not need to exclude the time-frequency resource unit #4 as an unavailable time-frequency resource unit.

Optionally, the second terminal apparatus in this application may be configured to determine and send the resource reservation information. For the resource reservation information, refer to the description of the resource reservation information in step 301.

The following describes, with reference to a channel access procedure, a resource determining method provided in an embodiment of this application. For example, a first terminal apparatus may perform the following steps to implement resource determining.

Step 401: The first terminal apparatus triggers resource selection in a second slot (namely, a slot *n*), to be specific, triggers execution of a channel access procedure on a first frequency band, a first carrier, a first BWP, a first channel, or a first resource pool. For example, the first terminal apparatus may start to trigger a channel access procedure of type 1 LBT in the slot *n* to access the first channel, and complete the channel access procedure at a first moment to access the first channel. The method further includes determining a duration of a first channel occupancy time.

The first terminal apparatus may perform step 401 before step 301.

Step 402: The first terminal apparatus may further determine a sensing window and a resource selection window, where the resource selection window includes the first channel occupancy time. The first terminal apparatus may determine an available time-frequency resource set in the resource selection based on resource reservation information received in the sensing window. The resource selection window includes at least a first slot, and the first moment is in the first slot in the resource selection window.

In a possible example, the sensing window may be before the second slot, and the resource selection window may be after the second slot. The resource selection window may continue to use the definition in step 201, that is, the resource selection window is represented as $[n + T_1, n + T_2]$. $n$ indicates a moment (or a slot) for triggering the first terminal apparatus to perform resource selection. For $T_1$ and $T_2$, refer to the description in S201. Details are not described herein again.

Similarly, the sensing window may continue to use the definition in step 202. Alternatively, the sensing window may be represented as $[n - T_{proc,0}^{SL} - T_0, n - T_{proc,0}^{SL}]$. $n$ indicates the slot for triggering the first terminal apparatus to perform resource selection. $T_{proc,0}^{SL}$ indicates a delay in processing a sensing result by the first terminal apparatus, and for a value, refer to Table 2.

In another possible example, a start slot of the resource selection window is a slot of a moment (namely, the first moment) at which the first terminal apparatus accesses the first channel, namely, the first slot.

For example, as shown in FIG. 10, the resource selection window may be represented as $[n_1, n_1 + T_4]$.

$n_1$ indicates the first slot, $T_4$ is a positive integer, $T_4$ satisfies $n_1 < n_1 + T_4 \leq PDB$ and $0 < (T_4 + 1) \cdot 2^\mu \leq T_{m\,cot,p}$, and $T_{m\,cot,p}$ indicates a maximum time domain length of the first channel occupancy time. $PDB$ indicates a packet delay budget, and a value of $\mu$ is related to a subcarrier spacing $\Delta f$ corresponding to the first terminal apparatus. For example, the value of $\mu$ and the subcarrier spacing corresponding to the first terminal apparatus may satisfy Table 4.

**Table 4**

| $\mu$ | $\Delta f = 2^\mu \cdot 15$ (unit: kHz) |
|---|---|
| 0 | 15 |
| 1 | 30 |
| 2 | 60 |
| 3 | 120 |
| 4 | 240 |
| 5 | 480 |
| 6 | 960 |

In another possible example, a time domain gap between an end slot of the sensing window and the first slot is at least N slots, where N is an integer greater than or equal to 0. Therefore, the first terminal apparatus may determine the sensing window based on the first slot.

For example, as shown in FIG. 10, the sensing window may be represented as $[n_1 - T_{proc,0}^{SL} - T_{proc,1}^{SL} - T_0, n_1 - T_{proc,0}^{SL} - T_{proc,1}^{SL}]$.

$n_1$ indicates the first slot. $T_{proc,0}^{SL}$ indicates a delay in processing a sensing result by the first terminal apparatus, and for a value, refer to Table 2. $T_{proc,1}^{SL}$ may indicate a delay in processing resource selection and data sending by the first terminal apparatus. For a value, refer to Table 3. $T_0$ is a positive integer.

Step 403: The first terminal apparatus may further exclude an unavailable time-frequency resource unit in the resource selection window based on the sensing result obtained in the sensing window. Step 403 is optional.

A process of obtaining the sensing result may include: The first terminal apparatus decodes SCI of the second terminal apparatus to obtain the resource reservation information, and determines, based on the resource reservation information, a time-frequency resource unit reserved by the second terminal apparatus in the resource selection window.

Optionally, a process in which the first terminal apparatus may determine the available time-frequency resource set based on the sensing result may include: The first terminal apparatus excludes the unavailable time-frequency resource unit from an available resource set $S_A$. Specifically, the first terminal apparatus may decode, in the sensing window, the SCI of the second terminal apparatus, to obtain the resource reservation information, measure, in the sensing window, an RSRP measurement value of a reference signal related to the resource reservation information, for example, an RSRP measurement value of a PSSCH DMRS or an RSRP measurement value of a PSCCH DMRS, and compare the RSRP measurement value with an RSRP threshold, to exclude a corresponding unavailable time-frequency resource unit (a time-frequency resource unit that is reserved in the resource selection window and whose RSRP measurement value is greater than or equal to the RSRP threshold) in the resource selection window. For example, the unavailable time-frequency resource unit in the resource selection window includes a time-frequency resource unit that is indicated by the resource reservation information and that overlaps with the first terminal apparatus in the resource selection window. For example, the unavailable time-frequency resource unit includes the time-frequency resource #2 and/or the time-frequency resource #3 that are/is shown in FIG. 9A.

When there are a plurality of pieces of resource reservation information (or a plurality of terminal apparatuses to which the resource reservation information belongs), the first terminal apparatus may further determine an unavailable time-frequency resource unit based on a priority indicated by the resource reservation information, or determine an unavailable time-frequency resource unit based on a value of the PDB indicated by the resource reservation information. For example, in the time-frequency resource #2 and the time-frequency resource #3 that are shown in FIG. 9A, SL information sent on the time-frequency resource #2 corresponds to a higher priority (or SL information sent on the time-frequency resource #2 corresponds to a lower value of the PDB). In this case, the unavailable time-frequency resource unit may include the time-frequency resource #2. Therefore, the first terminal apparatus may exclude the time-frequency resource #2, to avoid a conflict between sending of first data and data sent by the second terminal apparatus on the time-frequency resource #2, to ensure that quality of service (quality of service, QoS) of this high-priority service does not deteriorate.

In some cases, the unavailable time-frequency resource unit in the resource selection window may further include time-frequency resource units that are in the resource selection window and that are related to the SCI information of the second terminal apparatus, for example, a time-frequency resource unit that is occupied by the PSCCH DMRS and that is used to carry the SCI information, and/or a time-frequency resource unit that is occupied by the PSSCH DMRS and that is scheduled by a PSCCH. For example, when an RSRP value detected by the first terminal apparatus on these time-frequency resource units is greater than or equal to an RSRP threshold, the first terminal apparatus may use these time-frequency resource units in the resource selection window as unavailable time-frequency resource units.

Step 404: The first terminal apparatus completes the channel access procedure of the first channel in the first slot (namely, the slot $n_1$). The first terminal apparatus may further determine a length of the first channel occupancy time. The first terminal apparatus may complete channel access at the first moment in the first slot.

Optionally, step 404 may be performed before step 402 or step 403.

Step 405: The first terminal apparatus determines an unavailable time-frequency resource set in the resource selection window based on the first slot.

The unavailable time-frequency resource set includes a time-frequency resource unit before the first slot.

Optionally, if S403 is not performed, in S405, the first terminal apparatus may further decode SCI information from at least one second terminal in the sensing window, to obtain resource reservation information, and exclude, based on a time-frequency resource indicated by the resource reservation information, an unavailable time-frequency resource unit in the resource selection window. Therefore, resource exclusion may be implemented based on a priority of a service reserved by the second terminal apparatus or a PDB, to ensure QoS of a high-priority service.

Step 406: The first terminal apparatus determines to share the first channel occupancy time with the at least one second terminal apparatus. For step 406, refer to the description that the first terminal apparatus determines to share the first channel occupancy time with the second terminal apparatus in step 301.

In a determining manner, the first terminal apparatus determines, based on the resource reservation information of the second terminal apparatus, that there is an intersection between the first time-frequency resource set and the first channel occupancy time, in other words, the second terminal apparatus has, in the first channel occupancy time, a reserved time-frequency resource for sending the SL information. Optionally, the first terminal apparatus determines, based on an identifier of the second terminal apparatus, that the first terminal apparatus and the second terminal apparatus are terminal apparatuses for sending or receiving the SL information.

In another determining manner, the first terminal apparatus determines, based on the resource reservation information of the second terminal apparatus, that there is an intersection between the first time-frequency resource set and the first channel occupancy time, in other words, the second terminal apparatus has, in the first channel occupancy time, a reserved time-frequency resource for sending the SL information, and a priority of the SL information is higher than a priority of SL information to be sent by the first terminal apparatus in the first channel occupancy time.

Optionally, the first terminal apparatus may further determine, based on a PDB (whose value is marked as a PDB 1) of the SL information to be sent by the first terminal apparatus in the first channel occupancy time and a PDB (whose value is marked as a PDB 2) of SL information to be sent by the second terminal apparatus in the first channel occupancy time, whether the first terminal apparatus shares the first channel occupancy time with the second terminal apparatus. For example, when there is the intersection between the first time-frequency resource set and the first channel occupancy time and PDB 2<PDB 1, the first terminal apparatus determines to share the first channel occupancy time with the second terminal apparatus.

Step 407: The first terminal apparatus determines a time-frequency resource for SL transmission.

In step 407, the terminal apparatus may determine a first time-frequency resource unit for sending the first data. For the first time-frequency resource unit, refer to the description in step 302.

For example, the first terminal apparatus may determine the first time-frequency resource unit based on the first channel occupancy time and a first part of time-frequency resource units in the first channel occupancy time. For example, the first terminal apparatus may determine the first time-frequency resource unit according to the following rule: The first time-frequency resource unit and at least one time-frequency resource unit in the first part of time-frequency resource units occupy consecutive slots in time domain.

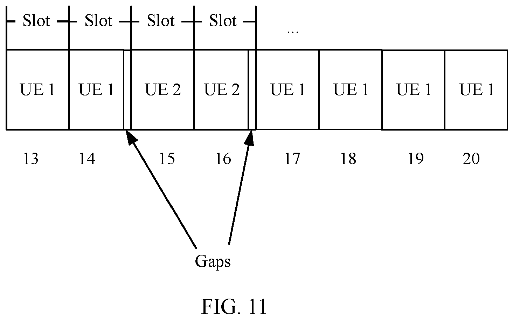

For example, as shown in FIG. 11, the first time-frequency resource unit includes a slot 13, a slot 14, and a slot 17 to a slot 20 in time domain, and the at least one time-frequency resource unit in the first part of time-frequency resource units includes a slot 15 and a slot 16 in time domain. Therefore, the first terminal apparatus may send the first data at some or all time domain locations of each of the slot 13, the slot 14, and the slot 17 to the slot 20, and the second terminal apparatus may send data at some or all time domain locations of each of the slot 15 and the slot 16. In other words, for example, a time domain unit of the time-frequency resource unit is slots. A slot, occupied by the first terminal apparatus, for sending data is consecutive to a slot, occupied by the second terminal apparatus, for sending data, to prevent a channel from being preempted by another terminal apparatus. It should be understood that, in FIG. 11, locations of UEs 1 represent time domain locations occupied by the first terminal apparatus, and UEs 2 represent slots occupied by the second terminal apparatus.

If the first terminal apparatus occupies some time domain locations in the first time-frequency resource unit, in the first time-frequency resource unit occupied by the first terminal apparatus, a gap (gap) whose length does not exceed a first duration and/or is greater than or equal to a second duration exists at the end of a time-domain resource unit (referred to as a first time-domain resource unit, where the first time-domain resource unit may be one slot) of a third time-frequency resource unit, where the third time-frequency resource unit is included in the first time-frequency resource unit, and the third time-frequency resource unit is before the at least one time-frequency resource unit, adjacent to the third time-frequency resource unit, in the first part of time-frequency resource units. In this application, the end includes a gap with a specific length, which is a time domain length that is in a time-frequency resource unit and that is not used to send SL information in time domain.

For example, as shown in FIG. 11, the first time-domain resource unit includes the slot 14, and there may be a gap whose length is equal to the first duration at the end of the slot 14.

Optionally, the second terminal apparatus may perform LBT channel access in a gap left at the end of the first time-domain resource unit, so that the second terminal apparatus can perform sending from a start location of a next time-frequency resource unit.

In addition, for the second terminal apparatus, a gap whose length does not exceed the first duration and/or is greater than or equal to the second duration is left at the end of a time-domain resource unit of a fourth time-frequency resource unit occupied by the second terminal apparatus (referred to as a second time-domain resource unit, where the second time-domain resource unit may be one slot), where the fourth time-frequency resource unit is included in the at least one time-frequency resource unit in the first part of time-frequency resource units, and the fourth time-domain resource unit is before the first time-frequency resource unit adjacent to the fourth time-domain resource unit.

For example, as shown in FIG. 11, the second time-domain resource unit includes the slot 16, and a gap whose length does not exceed the first duration is left at the end of the slot 16.

To meet the foregoing rule, after excluding the unavailable time-frequency resource unit, the first terminal apparatus may determine, in the resource selection window, at least one time-frequency resource unit that is not reserved by the second terminal apparatus. The at least one time-frequency resource unit may be represented as $k_i$, and $i$ indicates a slot index of each time-frequency resource unit ($i \in$ RSW). In other words, a time-frequency resource indicated by the SCI in the at least one second terminal does not include a time-frequency resource in the time-frequency resource unit $k_i$. The first terminal apparatus may determine a second time-frequency resource unit based on $k_i$, in other words, the second time-frequency resource unit may include a time-frequency resource in $k_i$.

Optionally, if at least one time-frequency resource unit reserved by the second terminal apparatus is further included after a time domain location of $k_i$, the first terminal apparatus may use $k_i$ as the first time-frequency resource unit.

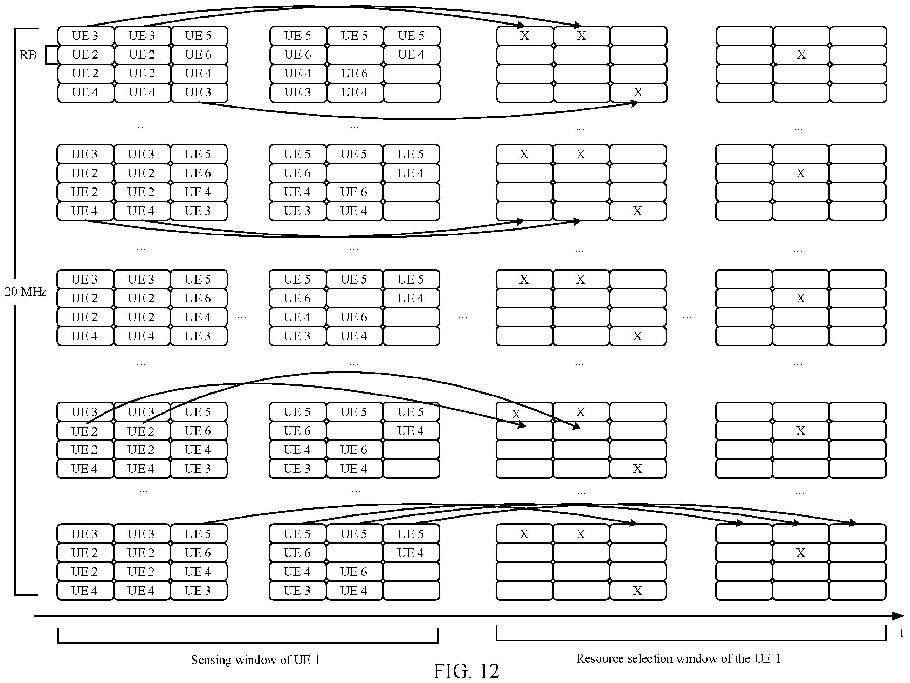

For example, as shown in FIG. 12, when interlaces (each interlace occupies one RB in frequency domain) are used for transmission, time-frequency resource units, occupied by resource reservation information of UE 2 to UE 6, in the sensing window (each time-frequency resource unit occupies one interlace in frequency domain) are respectively represented by the UE 2 to the UE 6 marked in the time-frequency resource units, and correspondingly, each arrow is used to mark a time-frequency resource unit, reserved based on the resource reservation information, in the resource selection window of the UE 1. It should be understood that, for ease of description, the arrow shows only an association relationship between some resource reservation information and a time-frequency resource unit reserved based on the resource reservation information. In FIG. 12, the UE 1 is a first terminal apparatus, the UE 3 and the UE 6 each are a second terminal apparatus, and the UE 2, the UE 4, and the UE 5 are other terminal apparatuses. Therefore, the UE 1 shares the first channel occupancy time with the UE 3 and the UE 6. In FIG. 12, time-frequency resource units marked with "X" in the resource selection window of the UE 1 respectively represent time-frequency resource units that need to be excluded by the UE 1, and these time-frequency resource units correspond to the UE 3 and the UE 6. The UE 1 does not need to exclude resources reserved by the UE 2, the UE 4, and the UE 5 in the resource selection window. It can be learned that there is transmission reserved by at least one second terminal before and after a slot $k$, but the slot $k$ is not reserved by the at least one second terminal for use, and the slot $k$ belongs to the slot $k_i$. However, if there is no SL transmission (SL transmission from at least one second terminal or the first terminal) after a slot $k + 2$, the slot $k + 2$ does not belong to the slot $k_i$.

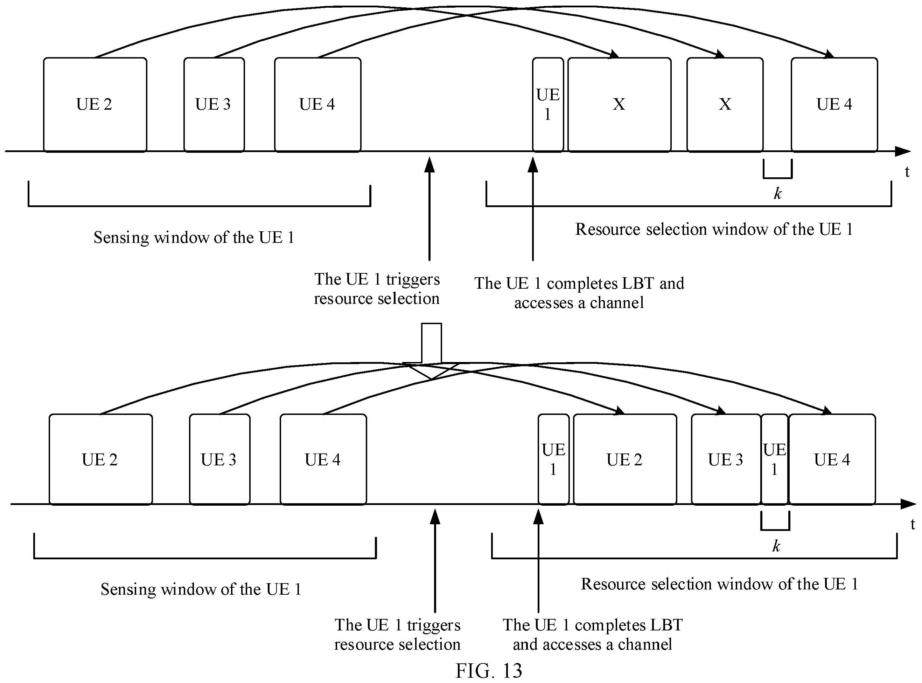

For another example, in FIG. 13, UE 1 is a first terminal apparatus, UE 2 to UE 4 each are a second terminal apparatus, and a slot $k$ shown in FIG. 13 is not reserved by any one of the UE 2, the UE 3, and the UE 4. In this case, when selecting a resource, the UE 1 needs to preferentially select the slot $k$ as a time domain location of the first time-frequency resource unit. Otherwise, $k$ is not reserved and is not used by the UE 1 to send data, and the first channel has a risk of being preempted by another terminal apparatus. Consequently, the first channel occupancy time is lost.

During implementation, after excluding the unavailable time-frequency resource unit, a physical (physical, PHY) layer (layer) of the first terminal apparatus may report an available time-frequency resource unit (or a time-frequency resource unit set) to a MAC layer of the first terminal apparatus, and may additionally report a time-frequency resource unit in $k_i$, where the time-frequency resource unit in $k_i$ may belong to the available time-frequency resource unit. When selecting a resource from an available resource set to send the SL information, the MAC layer needs to ensure that the time-frequency resource unit in $k_i$ is selected, that is, there is no case in which a resource in $k_i$ is not selected. Therefore, a requirement that the first time-frequency resource unit and the at least one time-frequency resource unit in the first part of time-frequency resource units occupy the consecutive slots in time domain can be met, to prevent the first channel from being preempted by another terminal apparatus in a sending gap of the first terminal apparatus or the second terminal apparatus. This improves communication reliability. The sending gap herein is a time domain location at which neither the first terminal apparatus nor the second terminal apparatus sends data when the first terminal apparatus or the second terminal apparatus has data (a part or all of the first data or a part or all of the second data) that has not been sent and after the first terminal apparatus starts to send the first data or the second terminal apparatus starts to send the second data.

Optionally, in this application, the second terminal apparatus may further send third data on the at least one time-frequency resource unit in the first part of time-frequency resource units. If a time-frequency resource unit before a time-frequency resource unit for sending the third data is the first time-frequency resource unit, the second terminal apparatus may perform LBT in the first time-frequency resource unit in the first duration, to meet a regulation requirement of channel access.

For example, as shown in FIG. 11, if the first terminal apparatus sends the first data in the slot 14, and the second terminal apparatus sends the SL information in the slot 15, the first terminal apparatus reserves a gap at the end of the slot 14 (if a gap length is marked as $t_{gap}$, second duration $\leq t_{gap} \leq$ first duration , $t_{gap} \geq$ second duration , or $t_{gap} \leq$ first duration), and the second terminal apparatus performs LBT channel access in the gap in the slot 14 before sending the SL information in the slot 15. If transmit end terminal apparatuses are switched (or changed) for a plurality of times in the first channel occupancy time, in other words, different terminals send SL information in different slots, a gap needs to be reserved in an adjacent slot before a slot in which different transmit end terminal apparatuses are switched (if a gap length is marked as $t_{gap}$, second duration $\leq t_{gap} \leq$ first duration, $t_{gap} \geq$ second duration, or $t_{gap} \leq$ first duration). For example, in FIG. 11, the slot 17 is a slot in which the UE 2 is changed to the UE 1 for sending, there is a gap in the slot 16, and the gap is used by the UE 1 to perform LBT channel access and send SL information in the slot 17.

It should be understood that, in this application, the first duration does not exceed a duration of one slot and/or the second duration does not exceed the duration of the slot. For example, the first duration is 584 microseconds, 16 microseconds, or 25 microseconds, and the second duration may be 584 microseconds, 16 microseconds, or 25 microseconds. Values of the first duration and the second duration may be the same, or may be different, and another value except for the foregoing example values may also be included. This is not specifically limited in the present invention. Determining the value of the first duration and/or the value of the second duration is related to an LBT channel access process. For example, if the second terminal apparatus uses type 2A LBT in the first channel occupancy time, the value of the first duration and/or the value of the second duration may be 25 microseconds. If the second terminal apparatus uses type 2B LBT in the first channel occupancy time, the value of the first duration and/or the value of the second duration may be 16 microseconds. If the second terminal apparatus uses type 2C LBT in the first channel occupancy time, the value of the first duration and/or the value of the second duration may be 584 microseconds. Optionally, the first terminal apparatus may further include LBT type information in first information, where the LBT type information indicates the second terminal apparatus to perform LBT channel access through the type 2A LBT, the type 2B LBT, or the type 2C LBT in the first channel occupancy time. The second terminal apparatus performs LBT channel access based on an LBT type indicated by the LBT type information. Optionally, the second terminal apparatus switches (switch), based on the LBT type information, from the type 1 LBT to the LBT type indicated by the LBT type information, to perform LBT channel access. The first terminal apparatus may reserve a gap whose length is the first duration or the second duration in a slot in a cyclic prefix extension (CP Extension, CPE) manner.

An example in which the first terminal apparatus determines the time-frequency resource for SL transmission in step 407 is shown in FIG. 12.

For example, when an interlace is used as a frequency domain scheduling unit, a manner in which the first terminal apparatus determines a time-frequency resource for transmitting the first data is shown in FIG. 12. In the resource selection window shown in FIG. 12, the UE 1 excludes the unavailable time-frequency resource unit only based on resource reservation information corresponding to the UE 3 and the UE 6. For example, a time-frequency resource #1, a time-frequency resource #2, a time-frequency resource #3, and a time-frequency resource #4 that are shown in FIG. 12 may be used as time-frequency resources for transmitting the first data.

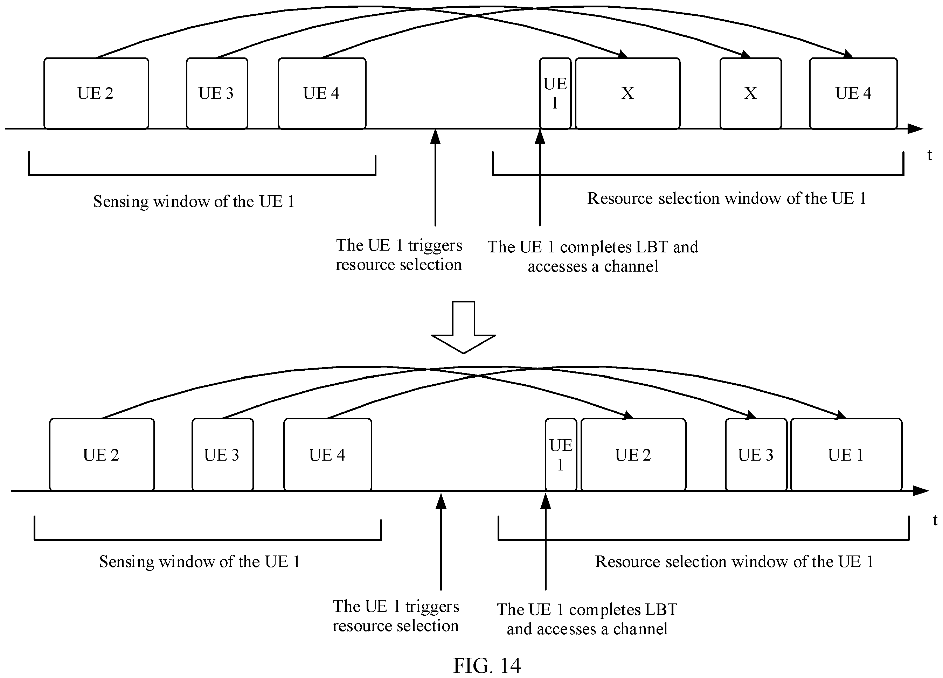

FIG. 12 is a diagram of performing transmission in an interlace manner in a 20 MHz channel or subchannel. This application is not limited to a quantity of channels or subchannels and a transmission mode in the interlace manner. In other words, a transmission mode in an interlace manner in a plurality of 20 MHz channels or subchannels may also be used in frequency domain, or transmission in a non-interlace manner may be used. For example, a transmission status that transmission of one UE occupies one 20 MHz channel is shown in FIG. 14.

In FIG. 14, UE 1 is used as a first terminal apparatus, UE 2 and UE 3 are used as second terminal apparatuses, and UE 4 does not belong to the second terminal apparatus. When determining an available transmission resource, UE does not need to exclude, based on resource reservation information of the UE 4, a time-frequency resource unit reserved by the UE 4. In other words, as shown in FIG. 14, the time-frequency resource reserved by the UE 4 may be used by the UE 1 for transmission.

Based on a same inventive concept, an embodiment of this application further provides a communication apparatus, configured to implement the foregoing functions implemented by the first terminal apparatus and/or the second terminal apparatus. The apparatus may include the structure shown in FIG. 6 and/or the structure shown in FIG. 7. Refer to the foregoing descriptions. For example, the processing module 610 of the first terminal apparatus shown in FIG. 6 and/or the processing unit 720 (for example, a processor) shown in FIG. 7 may be configured to perform step 301 shown in FIG. 8, and perform another processing action performed by the first terminal apparatus in embodiments of this application. The transceiver module 620 of the first terminal apparatus shown in FIG. 6 and/or the transceiver unit 710 (for example, a transceiver) shown in FIG. 7 may be configured to perform step 302 shown in FIG. 8, and perform another communication action performed by the first terminal apparatus in embodiments of this application.

An embodiment of this application provides a communication system. The communication system may include the first terminal apparatus and/or the second terminal apparatus in the foregoing embodiments. Optionally, the communication system may include the structure shown in either FIG. 1 or FIG. 2. The communication apparatus may be configured to implement the steps implemented by the first terminal apparatus and/or the second terminal apparatus in the communication method shown in FIG. 8.

An embodiment of this application further provides a computer-readable storage medium. The computer-readable storage medium is configured to store a computer program. When the computer program is executed by a computer, the computer may implement a procedure related to the first terminal apparatus and/or the second terminal apparatus in the embodiment shown in FIG. 8 provided in the foregoing method embodiment.

An embodiment of this application further provides a computer program product. The computer program product is configured to store a computer program. When the computer program is executed by a computer, the computer may implement a procedure related to the first terminal apparatus and/or the second terminal apparatus in the embodiment shown in FIG. 8 provided in the foregoing method embodiment.

An embodiment of this application further provides a chip or a chip system (or a circuit). The chip may include a processor, and the processor may be configured to invoke a program or instructions in a memory, to perform a procedure related to the first terminal apparatus and/or the second terminal apparatus in the embodiment shown in FIG. 8 provided in the foregoing method embodiment. The chip system may include the chip, and may further include another component such as a memory or a transceiver.

It may be understood that the processor in embodiments of this application may be a CPU, or may be another general-purpose processor, a digital signal processor (digital signal processor, DSP), an application-specific integrated circuit (application-specific integrated circuit, ASIC), a field-programmable gate array (field-programmable gate array, FPGA), another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write information into the storage medium. Certainly, the storage medium may be a composition part of the processor. The processor and the storage medium may be disposed in an ASIC. In addition, the ASIC may be disposed in a first terminal apparatus and/or the second terminal apparatus. Certainly, the processor and the storage medium may exist in a network device or a terminal device as discrete components.

All or some of the foregoing embodiments may be implemented by software, hardware, firmware, or any combination thereof. When the software is used for implementation, all or some of the foregoing embodiments may be implemented in a form of a computer program product. The computer program product includes one or more computer programs or instructions. When the computer programs or instructions are loaded and executed on a computer, all or some of the procedures or functions in embodiments of this application are performed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape, may be an optical medium, for example, a digital video disc, or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects and indicates that three relationships may exist. For example, A and/or B may indicate the following cases: Only A exists, both A and B exist, and only B exists. A and B may be singular or plural. In the text descriptions of this application, the character "/" usually indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A resource determining method, comprising:

   determining, by a first terminal apparatus, an available time-frequency resource set in a resource selection window based on resource reservation information of a second terminal apparatus and a first channel occupancy time, wherein the first channel occupancy time is a channel occupancy time shared by the first terminal apparatus and the second terminal apparatus, the first channel occupancy time is in the resource selection window determined by the first terminal apparatus, the resource reservation information indicates a first time-frequency resource set used by the second terminal apparatus to send data, a first part of time-frequency resource units in the first time-frequency resource set are in the first channel occupancy time, and the available time-frequency resource set does not comprise at least one time-frequency resource unit in the first part of time-frequency resource units; and
   sending, by the first terminal apparatus, first data on at least one first time-frequency resource unit in the available time-frequency resource set.

2. The method according to claim 1, wherein the method further comprises:
   sending, by the first terminal apparatus, first information to the second terminal apparatus, wherein the first information comprises second information and an identifier of the second terminal apparatus, and the second information indicates the at least one time-frequency resource unit in the first part of time-frequency resource units.

3. The method according to claim 2, wherein the first information further comprises a duration of the first channel occupancy time.

4. The method according to any one of claims 1 to 3, wherein the method further comprises:
sending, by the first terminal apparatus, indication information to the second terminal apparatus, wherein the indication information indicates that the first terminal apparatus shares the first channel occupancy time with the second terminal apparatus.

5. The method according to any one of claims 1 to 4, wherein there are a plurality of terminal apparatuses that share the first channel occupancy time with the first terminal apparatus, and/or there are a plurality of terminal apparatuses to which the resource reservation information received by the first terminal apparatus belongs; and the method further comprises:
determining, by the first terminal apparatus, the second terminal apparatus based on service priorities of the plurality of terminal apparatuses.

6. The method according to any one of claims 1 to 5, wherein the at least one first time-frequency resource unit and the at least one time-frequency resource unit in the first part of time-frequency resource units occupy consecutive slots in time domain.

7. The method according to any one of claims 1 to 6, wherein a gap whose length does not exceed a first duration and/or is greater than or equal to a second duration exists at the end of a first slot, the first slot is a slot of a third time-frequency resource unit, the third time-frequency resource unit is comprised in the first time-frequency resource unit, and the third time-frequency resource unit is before the at least one time-frequency resource unit, adjacent to the third time-frequency resource unit, in the first part of time-frequency resource units; and/or
a gap whose length does not exceed the first duration and/or is greater than or equal to the second duration exists at the end of a third slot, the third slot is a time-domain resource unit of a fourth time-frequency resource unit, the fourth time-domain resource unit is comprised in the at least one time-frequency resource unit in the first part of time-frequency resource units, and the fourth time-domain resource unit is before a first time-frequency resource unit adjacent to the fourth time-domain resource unit.

8. The method according to claim 7, wherein the first duration is less than a duration of one slot and/or the second duration is less than the duration of the slot.

9. The method according to any one of claims 1 to 8, wherein the method further comprises:

accessing, by the first terminal apparatus, a first channel at a first moment, wherein the first moment is a start moment of the first channel occupancy time, the first moment is in the first slot, and the first slot is in the resource selection window;
triggering, by the first terminal apparatus, resource selection in a second slot; and
determining, by the first terminal apparatus, a sensing window and the resource selection window based on the second slot, wherein the resource reservation information is received in the sensing window, the sensing window is before the second slot, and the resource selection window is after the second slot.

10. The method according to any one of claims 1 to 8, wherein the method further comprises:

accessing, by the first terminal apparatus, a first channel at a first moment, wherein the first moment is a start moment of the first channel occupancy time, and the first moment is in the first slot; and
determining, by the first terminal apparatus, the resource selection window based on the first slot, wherein a start slot of the resource selection window is the first slot.

11. The method according to claim 10, wherein the method further comprises:
determining, by the first terminal apparatus, a sensing window based on the first slot, wherein a gap between an end slot of the sensing window and the first slot in time domain is N slots, and N is an integer greater than or equal to 0.

12. The method according to any one of claims 1 to 11, wherein a time domain location of the resource selection window is $[n_1, n_1 + T_4]$, $n_1$ indicates the first slot, $T_4$ is a positive integer, $T_4$ satisfies: $n_1 < n_1 + T_4 \leq PDB$ and $0 < (T_4 + 1) \cdot 2^\mu \leq T_{m\,cot,\,p}$, $T_{m\,cot,\,p}$ indicates a maximum time domain length of the first channel occupancy time, $PDB$ indicates a packet delay budget, and a value of $\mu$ is related to a subcarrier spacing corresponding to the first terminal apparatus.

13. The method according to claim 11, wherein a time domain location of the sensing window is
$$[n_1 - T_{proc,0}^{SL} - T_{proc,1}^{SL} - T_0, \ n_1 - T_{proc,0}^{SL} - T_{proc,1}^{SL}]$$, $n_1$ indicates the first slot, values of $T_0$, $T_{proc,0}^{SL}$, and $T_{proc,1}$ are related to a subcarrier spacing corresponding to the first terminal apparatus, and $T_0$ is a positive integer.

14. A resource determining method, comprising:

   determining, by a second terminal apparatus, resource reservation information, wherein the resource reservation information indicates a first time-frequency resource set used by the second terminal apparatus to send second data, a first part of time-frequency resource units in the first time-frequency resource set are in a first channel occupancy time, and the first channel occupancy time is a channel occupancy time shared by a first terminal apparatus and the second terminal apparatus; and
   sending, by the second terminal apparatus, the resource reservation information.

15. The method according to claim 14, wherein the method further comprises:
   receiving, by the second terminal apparatus, first information from the first terminal apparatus, wherein the first information comprises second information and an identifier of the second terminal apparatus, and the second information indicates at least one time-frequency resource unit in the first part of time-frequency resource units.

16. The method according to claim 15, wherein the first information further comprises a duration of the first channel occupancy time.

17. The method according to claim 15 or 16, wherein the method further comprises:

   accessing, by the second terminal apparatus, a channel based on the first information; and
   sending, by the second terminal apparatus, third data on the at least one time-frequency resource unit in the first part of time-frequency resource units, wherein the third data belongs to the second data.

18. The method according to any one of claims 14 to 17, wherein the method further comprises:
   receiving, by the second terminal apparatus, indication information from the first terminal apparatus, wherein the indication information indicates that the first terminal apparatus shares the first channel occupancy time with the second terminal apparatus.

19. A resource determining apparatus, comprising a communication module and a processing module, wherein

   the communication module is configured to determine an available time-frequency resource set in a resource selection window based on resource reservation information of a second terminal apparatus and a first channel occupancy time, wherein the first channel occupancy time is a channel occupancy time shared by the apparatus and the second terminal apparatus, the first channel occupancy time is in the resource selection window determined by the apparatus, the resource reservation information indicates a first time-frequency resource set used by the second terminal apparatus to send data, a first part of time-frequency resource units in the first time-frequency resource set are in the first channel occupancy time, and the available time-frequency resource set does not comprise at least one time-frequency resource unit in the first part of time-frequency resource units;
   the processing module is configured to determine first data; and
   the communication module is further configured to send the first data on at least one first time-frequency resource unit in the available time-frequency resource set.

20. The apparatus according to claim 19, wherein the communication module is further configured to:
   send first information to the second terminal apparatus, wherein the first information comprises second information and an identifier of the second terminal apparatus, and the second information indicates the at least one time-frequency resource unit in the first part of time-frequency resource units.

21. The apparatus according to claim 20, wherein the first information further comprises a duration of the first channel occupancy time.

22. The apparatus according to any one of claims 19 to 21, wherein the communication module is further configured to:

send indication information to the second terminal apparatus, wherein the indication information indicates that the apparatus shares the first channel occupancy time with the second terminal apparatus.

23. The apparatus according to any one of claims 19 to 22, wherein there are a plurality of terminal apparatuses that share the first channel occupancy time with the apparatus, and/or there are a plurality of terminal apparatuses to which the resource reservation information received by the apparatus belongs; and the processing module is further configured:
determine the second terminal apparatus based on service priorities of the plurality of terminal apparatuses.

24. The apparatus according to any one of claims 19 to 23, wherein the first time-frequency resource unit and the at least one time-frequency resource unit in the first part of time-frequency resource units occupy consecutive slots in time domain.

25. The apparatus according to any one of claims 19 to 24, wherein a gap whose length does not exceed a first duration and/or is greater than or equal to a second duration exists at the end of a first slot, the first slot is a slot of a third time-frequency resource unit, the third time-frequency resource unit is comprised in the first time-frequency resource unit, and the third time-frequency resource unit is before the at least one time-frequency resource unit, adjacent to the third time-frequency resource unit, in the first part of time-frequency resource units; and/or
a gap whose length does not exceed the first duration and/or is greater than or equal to the second duration exists at the end of a third slot, the third slot is a time-domain resource unit of a fourth time-frequency resource unit, the fourth time-domain resource unit is comprised in the at least one time-frequency resource unit in the first part of time-frequency resource units, and the fourth time-domain resource unit is before a first time-frequency resource unit adjacent to the fourth time-domain resource unit.

26. The apparatus according to claim 25, wherein the first duration is less than a duration of one slot and/or the second duration is less than the duration of the slot.

27. The apparatus according to any one of claims 19 to 26, wherein the processing module is further configured to:

    access a first channel at a first moment, wherein the first moment is a start moment of the first channel occupancy time, the first moment is in the first slot, and the first slot is in the resource selection window;
    trigger resource selection in a second slot; and
    determine a sensing window and the resource selection window based on the second slot, wherein the resource reservation information is received in the sensing window, the sensing window is before the second slot, and the resource selection window is after the second slot.

28. The apparatus according to any one of claims 19 to 26, wherein the processing module is further configured to:

    access a first channel at a first moment, wherein the first moment is a start moment of the first channel occupancy time, and the first moment is in the first slot; and
    determine the resource selection window based on the first slot, wherein a start slot of the resource selection window is the first slot.

29. The apparatus according to claim 28, wherein the processing module is further configured to:
determine a sensing window based on the first slot, wherein a gap between an end slot of the sensing window and the first slot in time domain is N slots, and N is an integer greater than or equal to 0.

30. The apparatus according to any one of claims 19 to 29, wherein a time domain location of the resource selection window is $[n_1, n_1 + T_4]$, $n_1$ indicates the first slot, $T_4$ is a positive integer, $T_4$ satisfies: $n_1 < n_1 + T_4 \le PDB$ and $0 < (T_4 + 1) \cdot 2^\mu \le T_{m\,cot,\,p}$, $T_{m\,cot,\,p}$ indicates a maximum time domain length of the first channel occupancy time, $PDB$ indicates a packet delay budget, and a value of $\mu$ is related to a subcarrier spacing corresponding to the first terminal apparatus.

31. The apparatus according to claim 29, wherein a time domain location of the sensing window is

$$[n_1 - T_{proc,0}^{SL} - T_{proc,1}^{SL} - T_0, \quad n_1 - T_{proc,0}^{SL} - T_{proc,1}^{SL}]$$, $n_1$ indicates the first slot, values of $T_0$, $T_{proc,0}^{SL}$, and $T_{proc,1}$ are related to a subcarrier spacing corresponding to the first terminal apparatus, and $T_0$ is a positive

integer.

32. A resource determining apparatus, comprising a communication module and a processing module, wherein

the processing module is configured to determine resource reservation information, wherein the resource reservation information indicates a first time-frequency resource set used by the apparatus to send second data, a first part of time-frequency resource units in the first time-frequency resource set are in a first channel occupancy time, and the first channel occupancy time is a channel occupancy time shared by a first terminal apparatus and the apparatus; and
the communication module is configured to send the resource reservation information.

33. The apparatus according to claim 32, wherein the communication module is further configured to:
receive first information from the first terminal apparatus, wherein the first information comprises second information and an identifier of the apparatus, and the second information indicates at least one time-frequency resource unit in the first part of time-frequency resource units.

34. The apparatus according to claim 33, wherein the first information further comprises a duration of the first channel occupancy time.

35. The apparatus according to claim 33 or 34, wherein the processing module is further configured to:

access a channel based on the first information; and
the communication module is further configured to:
send third data on the at least one time-frequency resource unit in the first part of time-frequency resource units, wherein the third data belongs to the second data.

36. The apparatus according to any one of claims 32 to 35, wherein the communication module is further configured to:
receive indication information from the first terminal apparatus, wherein the indication information indicates that the first terminal apparatus shares the first channel occupancy time with the apparatus.

37. A resource determining apparatus, comprising a transceiver, a memory, and a processor, wherein

the transceiver is used by the apparatus to perform communication;
the memory is configured to store a computer program; and
the processor is configured to run the computer program, so that the communication apparatus performs the method according to any one of claims 1 to 13.

38. A resource determining apparatus, comprising a transceiver, a memory, and a processor, wherein

the transceiver is used by the apparatus to perform communication;
the memory is configured to store a computer program; and
the processor is configured to run the computer program, so that the communication apparatus performs the method according to any one of claims 14 to 18.

39. A computer-readable storage medium, wherein the computer-readable storage medium is configured to store a computer program, and when the computer program is run on a computer, the computer is enabled to perform the method according to any one of claims 1 to 13 or the method according to any one of claims 14 to 18.

40. A computer program product, wherein when the computer program product runs on a computer, the computer is enabled to perform the method according to any one of claims 1 to 13 or the method according to any one of claims 14 to 18.

41. A communication system, comprising the apparatus according to any one of claims 19 to 31 or claim 37 and the apparatus according to any one of claims 32 to 36 or claim 38.

42. A chip, comprising a processor, wherein the processor is configured to implement the method according to any one of claims 1 to 13 or the method according to any one of claims 14 to 18.

**43.** A communication apparatus, configured to implement the method according to any one of claims 1 to 13 or the method according to any one of claims 14 to 18.

FIG. 1

FIG. 2

FIG. 3A

Interlace #1,
RB #1

Interlace #1,
RB #11

...

Interlace #1,
RB #91

RB

FIG. 3B

| Resource pool #1 | Subchannel |
| --- | --- |
| | Subchannel |
| | Subchannel |
| | Subchannel |

FIG. 4A

Resource
pool #2 | Subchannel

## FIG. 4B

Resource
pool #3 | Interlaces | Subchannel

## FIG. 5

Processing
module
610 | Transceiver
module
620

## FIG. 6

Antenna

Radio frequency circuit

710

Memory ⟺ Processor

720

Input/Output apparatus

FIG. 7

301: A first terminal apparatus determines an available time-frequency resource set in a resource selection window based on resource reservation information of a second terminal apparatus and a first channel occupancy time

302: The first terminal apparatus sends first data on at least one first time-frequency resource unit in the available time-frequency resource set

FIG. 8

FIG. 9A

FIG. 9B

Sensing window

Resource selection window

#0 #1 #2 #3 #4

Slot $n$

Slot $n_1$

First COT

t

SCI   SCI from a third terminal apparatus

FIG. 9C

$n_1-T^{SL}_{proc,0}-T^{SL}_{proc,1}-T_0$

$n_1-T^{SL}_{proc,0}-T^{SL}_{proc,1}$

$n_1$

$n_1+T_4$

Sensing window

Resource selection window

Slot $n$

t

FIG. 10

FIG. 11

RB

20 MHz

| UE 3 | UE 3 | UE 5 | | UE 5 | UE 5 | UE 5 | | X | X | | | | | |
| UE 2 | UE 2 | UE 6 | | UE 6 | | UE 4 | | | | | | | X | |
| UE 2 | UE 2 | UE 4 | | UE 4 | UE 6 | | | | | | | | | |
| UE 4 | UE 4 | UE 3 | | UE 3 | UE 4 | | | | | X | | | | |

...

| UE 3 | UE 3 | UE 5 | | UE 5 | UE 5 | UE 5 | | X | X | | | | | |
| UE 2 | UE 2 | UE 6 | | UE 6 | | UE 4 | | | | | | | X | |
| UE 2 | UE 2 | UE 4 | | UE 4 | UE 6 | | | | | | | | | |
| UE 4 | UE 4 | UE 3 | | UE 3 | UE 4 | | | | | X | | | | |

...

| UE 3 | UE 3 | UE 5 | | UE 5 | UE 5 | UE 5 | | X | X | | | | | |
| UE 2 | UE 2 | UE 6 | | UE 6 | | UE 4 | | | | | | | X | |
| UE 2 | UE 2 | UE 4 | | UE 4 | UE 6 | | | | | | | | | |
| UE 4 | UE 4 | UE 3 | | UE 3 | UE 4 | | | | | X | | | | |

...

| UE 3 | UE 3 | UE 5 | | UE 5 | UE 5 | UE 5 | | X | X | | | | | |
| UE 2 | UE 2 | UE 6 | | UE 6 | | UE 4 | | | | | | | X | |
| UE 2 | UE 2 | UE 4 | | UE 4 | UE 6 | | | | | | | | | |
| UE 4 | UE 4 | UE 3 | | UE 3 | UE 4 | | | | | X | | | | |

...

| UE 3 | UE 3 | UE 5 | | UE 5 | UE 5 | UE 5 | | X | X | | | | | |
| UE 2 | UE 2 | UE 6 | | UE 6 | | UE 4 | | | | | | | X | |
| UE 2 | UE 2 | UE 4 | | UE 4 | UE 6 | | | | | | | | | |
| UE 4 | UE 4 | UE 3 | | UE 3 | UE 4 | | | | | X | | | | |

t

Sensing window of UE 1

Resource selection window of the UE 1

FIG. 12

EP 4 456 639 A1

| UE 2 | UE 3 | UE 4 | | UE 1 | X | X | UE 4 |

Sensing window of the UE 1

$k$

Resource selection window of the UE 1

The UE 1 triggers
resource selection

The UE 1 completes LBT and
accesses a channel

| UE 2 | UE 3 | UE 4 | | UE 1 | UE 2 | UE 3 | UE 1 | UE 4 |

Sensing window of the UE 1

$k$

Resource selection window of the UE 1

The UE 1 triggers
resource selection

The UE 1 completes LBT
and accesses a channel

FIG. 13

EP 4 456 639 A1

UE 2    UE 3    UE 4    UE 1    X    X    UE 4

t

Sensing window of the UE 1    Resource selection window of the UE 1

The UE 1 triggers
resource selection

The UE 1 completes LBT and
accesses a channel

UE 2    UE 3    UE 4    UE 1    UE 2    UE 3    UE 1

t

Sensing window of the UE 1    Resource selection window of the UE 1

The UE 1 triggers
resource selection

The UE 1 completes LBT
and accesses a channel

FIG. 14

## INTERNATIONAL SEARCH REPORT

| International application No. |
|---|
| **PCT/CN2023/078714** |

| | |
|---|---|
| **A.** | **CLASSIFICATION OF SUBJECT MATTER** |
| | H04W 72/04(2023.01)i |

According to International Patent Classification (IPC) or to both national classification and IPC

| | |
|---|---|
| **B.** | **FIELDS SEARCHED** |

Minimum documentation searched (classification system followed by classification symbols)

IPC:H04W,H04Q

Documentation searched other than minimum documentation to the extent that such documents are included in the fields searched

Electronic data base consulted during the international search (name of data base and, where practicable, search terms used)

ENTXT, CNTXT, DWPI, 3GPP: 资源, 预约, 信道占用时间, 资源集合, 接入, 时隙, 窗口, resources, reservations, COT, resource Set, access, time slot, window

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | CN 112398613 A (HUAWEI TECHNOLOGIES CO., LTD.) 23 February 2021 (2021-02-23) description, paragraphs [0006]-[0039] | 1-43 |
| A | CN 113747463 A (HUAWEI TECHNOLOGIES CO., LTD.) 03 December 2021 (2021-12-03) entire document | 1-43 |
| A | CN 114051747 A (BEIJING XIAOMI MOBILE SOFTWARE CO., LTD.) 15 February 2022 (2022-02-15) entire document | 1-43 |
| A | WO 2021088055 A1 (GUANGDONG OPPO MOBILE TELECOMMUNICATIONS CORP., LTD.) 14 May 2021 (2021-05-14) entire document | 1-43 |
| A | PANASONIC. "SR in NR-U" *3GPP TSG-RAN WG2 Meeting#103bis R2-1814331,* 12 October 2018 (2018-10-12), entire document | 1-43 |

☐ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 April 2023** | **20 April 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

International application No.

**PCT/CN2023/078714**

| Patent document cited in search report | | | Publication date (day/month/year) | Patent family member(s) | | | Publication date (day/month/year) |
|---|---|---|---|---|---|---|---|
| CN | 112398613 | A | 23 February 2021 | WO | 2021027940 | A1 | 18 February 2021 |
| | | | | EP | 3993302 | A1 | 04 May 2022 |
| | | | | US | 2022159724 | A1 | 19 May 2022 |
| CN | 113747463 | A | 03 December 2021 | WO | 2021238822 | A1 | 03 December 2021 |
| CN | 114051747 | A | 15 February 2022 | | None | | |
| WO | 2021088055 | A1 | 14 May 2021 | EP | 4017199 | A1 | 22 June 2022 |
| | | | | US | 2022201750 | A1 | 23 June 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210194595